# EUROPEAN PATENT APPLICATION

(11) **EP 2 987 873 A2**
(43) Date of publication of application: **24.02.2016**
(21) Application number: 15176055.0
(22) Date of filing: 21.07.2010
(51) Int. Cl.: C21D 9/40, C21D 1/10, C22C 38/00, C22C 38/22, C22C 38/44, F03D 13/00, F16C 19/38, F16C 33/62, F16C 33/64, C21D 1/28, C21D 7/06, C21D 1/42, C22C 38/02, C22C 38/04

(54) **METHOD FOR HEAT-TREATING A RING-SHAPED MEMBER, METHOD FOR PRODUCING A RING-SHAPED MEMBER, RING-SHAPED MEMBER, BEARING RING, ROLLING BEARING, AND METHOD FOR PRODUCING A BEARING RING**

(30) Priority: 22.07.2009 JP 2009170705; 01.12.2009 JP 2009273385; 01.12.2009 JP 2009273386; 01.12.2009 JP 2009273387; 01.12.2009 JP 2009273388
(62) Divisional of application: 10802284.9
(71) Applicant: NTN Corporation, Osaka-shi, Osaka 550-0003 (JP)
(72) Inventor: Yuki, Hiroshi, Kuwana-shi, Mie 511-0867 (JP); Ohki, Chikara, Kuwana-shi, Mie 511-0867 (JP); Yagita, Kazuhiro, Kuwana-shi, Mie 511-0867 (JP)
(74) Representative: Bockhorni & Kollegen

(57) **Abstract**

Disclosed is a method for heat-treating a ring-shaped member, which makes it possible to form a quench-hardened region having a uniform annular shape in the circumferential direction, while the production costs in terms of the quenching apparatus are kept down. The method includes the following steps: a step in which a coil (21) which is disposed in such a way as to face a rolling contact surface (11) of a ring-shaped formed body (10) made of steel and which performs induction heating of the formed body (10) is rotated relative to the formed body (10) in the circumferential direction thereof, whereby an annular heating region which is heated to a temperature at or above an A₁ point is formed on the formed body (10); and a step in which the whole of the heating region is simultaneously cooled to a temperature at or below an M_{S} point.

## Description

### TECHNICAL FIELD

The present invention relates to a method for heat-treating a ring-shaped member, a method for producing a ring-shaped member, a ring-shaped member, a bearing ring, a rolling bearing and a method for producing a bearing ring.

### BACKGROUND ART

Induction quenching may be employed as quench hardening on a ring-shaped member of steel such as a bearing ring of a rolling bearing. This induction quenching has such advantages that equipment can be simplified and heat treatment in a short time is enabled, as compared with general quench hardening of heating the ring-shaped member in a furnace and thereafter dipping the same in a cooling liquid such as oil.

In order to simultaneously heat an annular region, to be quench-hardened, along the circumferential direction of the ring-shaped member in the induction quenching, however, an induction heating member such as a coil for induction-heating the ring-shaped member must be arranged to be opposed to this region. In a case of quench-hardening a large-sized ring-shaped member, therefore, there are such problems that a large-sized coil responsive thereto and a power source of high capacity corresponding to this coil are required and the production cost for a quenching apparatus increases.

Transfer quenching employing a small-sized induction heating coil may be employed as a countermeasure for avoiding such problems. In this transfer quenching, high-frequency induction heating is executed with a coil arranged to be opposed to part of an annular region, to be heated, of a ring-shaped member for relatively moving along this region, and a cooling liquid such as water is injected toward the heated region immediately after passage of the coil thereby successively quench-hardening this region. In a case of merely employing this transfer quenching, however, a quench starting region and a quench ending region partially overlap with each other when the coil goes around from a region (quench starting region) where the quenching has been started and quench-hardens a region (quench ending region) to be finally subjected to the quenching. Therefore, occurrence of quench cracking resulting from re-quenching of the overlapping regions is apprehended. Further, regions adjacent to the aforementioned overlapping regions are heated to a temperature of not more than an A₁ point and tempered following heating of the quench ending region, and hence there is also such an apprehension that hardness lowers. When the transfer quenching is employed, therefore, a countermeasure of leaving a region (soft zone) not subjected to quenching between the quench starting region and the quench ending region is generally employed. This soft zone has low yield strength and is also insufficient in abrasion resistance, due to low hardness. Therefore, in a case of forming a soft zone on a bearing ring of a rolling bearing, for example, it is necessary to see to it that the soft zone does not become a load region.

On the other hand, there is proposed a method for executing the aforementioned transfer quenching forming a soft zone and thereafter cutting a region corresponding to the zone while fitting a stopper body subjected to quenching into this region (refer to Japanese Patent Laying-Open No. 6-17823 (Patent Literature 1), for example). Thus, remaining of the soft zone having low hardness can be avoided.

There is also proposed a method for avoiding formation of a soft zone by employing two coils oppositely moving in the circumferential direction of a ring-shaped member (refer to Japanese Patent Laying-Open No. 6-200326 (Patent Literature 2), for example). According to this method, occurrence of a re-quenched region can also be avoided while avoiding formation of a soft zone by starting quenching in a state where the two coils are arranged to be adjacent to each other and ending the quenching on a position where the same butt against each other again.

In a bearing ring of a large-sized rolling bearing, a quench-hardened layer may be formed along a rolling contact surface. Such a structure is so employed that the time and the cost necessary for heat treatment can be reduced as compared with a case of quench-hardening the whole of the bearing ring. Further, durability of the bearing ring can also be improved by quench-hardening only a portion around the rolling contact surface which is the surface of the bearing ring thereby leaving compressive stress on the rolling contact surface. On the other hand, induction quenching can be listed as a method for forming such a quench-hardened layer. As to induction quenching on a large-sized bearing ring, various studies have been made in general (refer to Japanese Patent Laying-Open No. 6-17823 (Patent Literature 1) and Japanese Patent Laying-Open No. 6-200326 (Patent Literature 2), for example).

### CITATION LIST

### PATENT LITERATURE

PTL 1: Japanese Patent Laying-Open No. 6-17823
PTL 2: Japanese Patent Laying-Open No. 6-200326

### SUMMARY OF INVENTION

### TECHNICAL PROBLEM

In the method disclosed in the aforementioned Patent Literature 1, however, there is such a problem that the number of steps for producing a ring-shaped member remarkably increases. In the method disclosed in the aforementioned Patent Literature 2, residual stress following quench hardening concentrates on a finally quenched region, and occurrence of heat treatment strain or quench cracking is apprehended.

In conventional induction quenching of a bearing ring, a region (induction heating region) of a coil facing the bearing ring and contributing to heating of the bearing ring has a curved shape corresponding to the shape of the bearing ring. In a case of executing quenching of bearing rings having different sizes or shapes, therefore, coils responsive to the shapes of the respective bearing rings are required, and the production cost for a quenching apparatus increases.

Further, there has been such a problem that sufficient durability cannot be supplied to the bearing ring if a quench-hardened layer is merely formed along a rolling contact surface.

When the bearing ring is fitted into another member and used, high hardness may be required also to a fitting surface which is a surface coming into contact with the other member. In order to supply high hardness to a fitting surface in a bearing ring in which a quench-hardened layer (rolling contact surface quenched layer) is formed by induction quenching on a region including a rolling contact surface, on the other hand, a quench-hardened layer (fitting surface quenched layer) must be formed also with respect to a region including the fitting surface. However, there are such problems that the structure of a quenching apparatus is complicated and the production cost for this apparatus increases in order to simultaneously form the rolling contact surface quenched layer and the fitting surface quenched layer. In a case of employing a process of forming one of the rolling contact surface quenched layer and the fitting surface quenched layer and thereafter forming the other layer, there arises such a problem that the previously formed quenched layer is tempered by heating in the formation of the subsequent quenched layer and hardness lowers.

The present invention has been proposed in order to solve the aforementioned problems.

### SOLUTION TO PROBLEM

A method for heat-treating a ring-shaped member according to the present invention includes the steps of forming, by relatively rotating an induction heating member arranged to face part of a ring-shaped formed body made of steel for induction-heating the formed body along the circumferential direction of the formed body, an annular heated region heated to a temperature of at least an A₁ point on the formed body and simultaneously cooling the whole of the heated region to a temperature of not more than an Mₛ point.

In the method for heat-treating a ring-shaped member according to the present invention, the induction heating member arranged to face part of the ring-shaped formed body relatively rotates along the circumferential direction, whereby the heated region is formed on the formed body. Therefore, an induction heating member small with respect to the outer shape of the ring-shaped member can be employed. Consequently, the production cost for a quenching apparatus can be suppressed also in a case of quench-hardening a large-sized ring-shaped member. In the method for heat-treating a ring-shaped member according to the present invention, further, the whole of the heated region is simultaneously cooled to the temperature of not more than the Mₛ point. Therefore, it becomes possible to form an annular quench-hardened region homogenous in the circumferential direction, and residual stress is inhibited from concentrating on a partial region. Thus, according to the inventive method for heat-treating a ring-shaped member, a method for heat-treating a ring-shaped member capable of forming an annular quench-hardened region homogenous in the circumferential direction can be provided while suppressing the production cost for a quenching apparatus.

In the aforementioned method for heat-treating a ring-shaped member, the induction heating member may relatively rotate at least twice along the circumferential direction of the formed body in the step of forming the heated region. Thus, homogeneous quench hardening can be implemented by suppressing dispersion in temperature in the circumferential direction.

In the aforementioned method for heat-treating a ring-shaped member, a plurality of induction heating members may be arranged along the circumferential direction of the formed body in the step of forming the heated region. Thus, homogeneous quench hardening can be implemented by suppressing dispersion in temperature in the circumferential direction.

A method for producing a ring-shaped member according to the present invention includes the steps of preparing a ring-shaped formed body made of steel and quench-hardening the formed body. In the step of quench-hardening the formed body, the formed body is quench-hardened by employing the aforementioned method for heat-treating a ring-shaped member according to the present invention.

In the method for producing a ring-shaped member according to the present invention, the formed body is quench-hardened by employing the aforementioned method for heat-treating a ring-shaped member according to the present invention in the step of quench-hardening the formed body. According to the inventive method for producing a ring-shaped member, therefore, a method for producing a ring-shaped member capable of forming an annular quench-hardened region homogeneous in the circumferential direction can be provided while suppressing the production cost for a quenching apparatus.

A ring-shaped member according to the present invention is produced by the aforementioned method for producing a ring-shaped member according to the present invention. According to the inventive ring-shaped member, a ring-shaped member provided with an annular quench-hardened region homogeneous in the circumferential direction can be provided while the cost for heat treatment is suppressed, since the same is produced by the aforementioned method for producing a ring-shaped member according to the present invention.

A bearing ring of a rolling bearing according to a first aspect of the present invention is produced by the aforementioned method for producing a ring-shaped member according to the present invention, and has an inner diameter of at least 1000 mm. According to the inventive bearing ring of a rolling bearing, a large-sized bearing ring in which an annular quench-hardened region homogeneous in the circumferential direction is formed to include a rolling contact surface can be provided while the cost for heat treatment is suppressed, since the same is produced by the aforementioned method for producing a ring-shaped member according to the present invention.

A bearing ring of a rolling bearing according to a second aspect of the present invention is a bearing ring of a rolling bearing having an inner diameter of at least 1000 mm. This bearing ring of a rolling bearing is characterized in that a quench-hardened layer of a rolling contact surface which is a surface where a rolling element rolls is formed by induction quenching in a uniform depth over the entire circumference. When described from another point of view, the bearing ring of a rolling bearing according to the second aspect of the present invention has an inner diameter of at least 1000 mm, and has a quench-hardened layer, formed by induction quenching, having an annular shape along the circumferential direction and a uniform depth, while the surface of the quench-hardened layer serves as a rolling contact surface. The quench-hardened layer having the annular shape along the circumferential direction and the uniform depth denotes a quench-hardened layer whose thickness is continuous (not discontinuous) in the circumferential direction.

According to the bearing ring of a rolling bearing according to the second aspect of the present invention, the quench-hardened layer having the annular shape homogeneous in the circumferential direction is formed by induction quenching, whereby a large-sized bearing ring excellent in durability can be provided.

A rolling bearing according to the first aspect of the present invention includes an inner ring, an outer ring arranged to enclose the outer peripheral side of the inner ring, and a plurality of rolling elements arranged between the inner ring and the outer ring. At least either one of the aforementioned inner ring and the outer ring is the aforementioned bearing ring of a rolling bearing according to the present invention.

According to the rolling bearing according to the first aspect of the present invention, the bearing ring of the aforementioned rolling bearing in which the annular quench-hardened region homogeneous in the circumferential direction is formed to include the rolling contact surface is employed for at least either one of the inner ring and the outer ring, whereby a rolling bearing excellent in durability can be provided.

A main shaft connected to a blade is penetratingly fixed to the inner ring and the outer ring is fixed to a housing in a wind turbine generator, whereby the aforementioned rolling bearing according to the first aspect can be employed as a rolling bearing (rolling bearing for a wind turbine generator) rotatably supporting the main shaft with respect to the housing. The aforementioned rolling bearing, excellent in durability, according to the first aspect of the present invention is suitable as the rolling bearing for a wind turbine generator.

The A₁ point denotes a point corresponding to a temperature at which the structure of steel starts transformation from ferrite to austenite in a case of heating the steel. The Mₛ point denotes a point corresponding to a temperature at which austenized steel starts martensitation when cooled.

A method for producing a bearing ring according to the first aspect of the present invention is a method for producing a bearing ring of a rolling bearing. This method for producing a bearing ring includes the steps of preparing a formed body constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity, forming an annular heated region heated to a temperature of at least an A₁ point on the formed body by relatively rotating an induction heating member arranged to face part of an annular region for becoming a rolling contact surface of the bearing ring in the formed body to induction-heat the formed body along the circumferential direction of the annular region, and simultaneously cooling the whole of the heated region to a temperature of not more than an Mₛ point.

A method for producing a bearing ring according to the second aspect of the present invention is a method for producing a bearing ring of a rolling bearing. This method for producing a bearing ring includes the steps of preparing a formed body constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity, forming an annular heated region heated to a temperature of at least an A₁ point on the formed body by relatively rotating an induction heating member arranged to face part of an annular region for becoming a rolling contact surface of the bearing ring in the formed body to induction-heat the formed body along the circumferential direction of the annular region, and simultaneously cooling the whole of the heated region to a temperature of not more than an Mₛ point.

In the method for producing a bearing ring according to the present invention, the induction heating member arranged to face part of the annular region for becoming the rolling contact surface relatively rotates along the circumferential direction, whereby the heated region is formed on the formed body. Therefore, it is possible to employ an induction heating member small with respect to the outer shape of the bearing ring. Consequently, the production cost for a quenching apparatus can be suppressed also in a case of quench-hardening a large-sized bearing ring. In the method for producing a bearing ring according to the present invention, further, the whole of the heated region is simultaneously cooled to the temperature of not more than the Mₛ point. Therefore, it becomes possible to simultaneously form a quench-hardened layer along the rolling contact surface over the entire circumference, and residual stress is inhibited from concentrating on a partial region. In the method for producing a bearing ring according to the present invention, in addition, steel capable of implementing sufficiently high hardness by quench hardening and having a proper component composition capable of suppressing quench cracking while ensuring high quenchability is employed as the material. Thus, according to the inventive method for producing a bearing ring, the quench-hardened layer can be homogeneously formed by induction quenching along the rolling contact surface over the entire circumference while suppressing the production cost for the quenching apparatus.

The reason why the component range of the steel constituting the formed body, i.e., the component range of the steel constituting the produced bearing ring has been limited to the aforementioned range is now described.

Carbon: at least 0.43 mass % and not more than 0.65 mass %

The carbon content exerts a remarkable influence on the hardness of the rolling contact surface of the bearing ring after the quench hardening. If the carbon content in the steel constituting the formed body (bearing ring) is less than 0.43 mass %, it becomes difficult to supply sufficient hardness to the rolling contact surface after the quench hardening. If the carbon content exceeds 0.65 mass %, on the other hand, occurrence of cracking (quench cracking) at the time of the quench hardening is apprehended. Therefore, the carbon content has been set to at least 0.43 mass % and not more than 0.65 mass %.

Silicon: at least 0.15 mass % and not more than 0.35 mass %

Silicon contributes to improvement in temper softening resistance of the steel.

If the silicon content in the steel constituting the formed body (bearing ring) is less than 0.15 mass %, the temper softening resistance becomes insufficient, and there is a possibility that the hardness of the rolling contact surface remarkably lowers due to tempering after the quench hardening or temperature rise during use of the bearing ring. If the silicon content exceeds 0.35 mass %, on the other hand, the hardness of the material before the quenching increases, and workability in cold working at the time of forming the material into the bearing ring lowers. Therefore, the silicon content has been set to at least 0.15 mass % and not more than 0.35 mass %.

Manganese: at least 0.60 mass % and not more than 1.10 mass %

Manganese contributes to improvement in quenchability of the steel. If the manganese content is less than 0.60 mass %, this effect is not sufficiently attained. If the manganese content exceeds 1.10 mass %, on the other hand, the hardness of the material before the quenching increases, and the workability in the cold working lowers. Therefore, the manganese content has been set to at least 0.60 mass % and not more than 1.10 mass %.

Chromium: at least 0.30 mass % and not more than 1.20 mass %

Chromium contributes to improvement in quenchability of the steel. If the chromium content is less than 0.30 mass %, this effect is not sufficiently attained. If the chromium content exceeds 1.20 mass %, on the other hand, there arises such a problem that the material cost rises. Therefore, the chromium content has been set to at least 0.30 mass % and not more than 1.20 mass %.

Molybdenum: at least 0.15 mass % and not more than 0.75 mass %

Molybdenum also contributes to improvement in quenchability of the steel. If the molybdenum content is less than 0.15 mass %, this effect is not sufficiently attained. If the molybdenum content exceeds 0.75 mass %, on the other hand, there arises such a problem that the material cost rises. Therefore, the molybdenum content has been set to at least 0.15 mass % and not more than 0.75 mass %.

Nickel: at least 0.35 mass % and not more than 0.75 mass %

Nickel also contributes to improvement in quenchability of the steel. While nickel is not an essential component in the steel constituting the bearing ring according to the present invention, the same can be added in a case where particularly high quenchability is required to the steel constituting the bearing ring such as a case where the outer shape of the bearing ring is large. If the nickel content is less than 0.35 mass %, the effect of improving the quenchability is not sufficiently attained. If the nickel content exceeds 0.75 mass %, on the other hand, there is a possibility that the quantity of residual austenite after the quenching increases to cause reduction of the hardness, reduction of dimensional stability and the like. Therefore, nickel is preferably added to the steel constituting the bearing ring in the range of at least 0.35 mass % and not more than 0.75 mass %.

The aforementioned method for producing a bearing ring may further include a step of executing normalizing on the formed body in advance of the step of forming the heated region.

The bearing ring produced by partially quench-hardening the region including the rolling contact surface by induction quenching must have hardness capable of ensuring prescribed strength also in a region (unhardened region) not quench-hardened. In order to ensure prescribed hardness in the unhardened region, tempering may be further executed after executing quenching on the whole formed body (bearing ring) before the induction quenching. When the steel having a relatively high carbon content and having the aforementioned component composition exhibiting high quenchability as described above is employed as the material, however, there is such a problem that quench cracking easily takes place. In the formed body consisting of the steel having the aforementioned component composition, on the other hand, sufficient hardness can be ensured by normalizing. Therefore, proper hardness can be supplied to the unhardened region by executing normalizing in advance of the induction quenching, in place of the ensuring of the hardness by the aforementioned quenching and tempering.

In the aforementioned method for producing a bearing ring, shot blasting may be executed while the formed body is cooled, by spraying hard particles onto the formed body along with gas in the step of executing the normalizing.

Thus, the shot blasting can be executed simultaneously with air-blast cooling at the time of the normalizing. Therefore, scales formed on a surface layer portion of the formed body due to heating in the normalizing are removed, and characteristic reduction of the bearing ring resulting from formation of the scales or reduction of thermal conductivity resulting from formation of the scales is suppressed.

In the aforementioned method for producing a bearing ring, the induction heating member may relatively rotate at least twice along the circumferential direction of the formed body in the step of forming the heated region. Thus, homogeneous quench hardening can be implemented by suppressing dispersion in temperature in the circumferential direction of the rolling contact surface.

In the aforementioned method for producing a bearing ring, a plurality of induction heating members may be arranged along the circumferential direction of the formed body in the step of forming the heated region. Thus, homogeneous quench hardening can be implemented by suppressing dispersion in temperature in the circumferential direction of the rolling contact surface.

In the aforementioned method for producing a bearing ring, temperatures on a plurality of portions of the heated region may be measured in the step of forming the heated region. Thus, the quench hardening can be executed by performing rapid cooling after confirming that homogeneous heating is implemented in the circumferential direction of the rolling contact surface. Consequently, homogeneous quench hardening can be implemented in the circumferential direction of the rolling contact surface.

A bearing ring according to a third aspect of the present invention is produced by the aforementioned method for producing a bearing ring according to the present invention, and has an inner diameter of at least 1000 mm. According to the bearing ring according to the third aspect of the present invention, a large-sized bearing ring in which a quench-hardened layer is homogeneously formed by induction quenching along a rolling contact surface over the entire circumference can be provided while the cost for heat treatment is suppressed, since the same is produced by the aforementioned method for producing a bearing ring according to the present invention.

A bearing ring according to a fourth aspect of the present invention is a bearing ring of a rolling bearing having an inner diameter of at least 1000 mm. This bearing ring is constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity, and a quench-hardened layer is formed by induction quenching along a rolling contact surface over the entire circumference.

A bearing ring according to a fifth aspect of the present invention is a bearing ring of a rolling bearing having an inner diameter of at least 1000 mm. This bearing ring is constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity, and a quench-hardened layer is formed by induction quenching along a rolling contact surface over the entire circumference.

In the aforementioned bearing ring according to the fourth aspect or the fifth aspect, the quench-hardened layer is formed by induction quenching along the rolling contact surface over the entire circumference. Therefore, the aforementioned bearing ring according to the fourth aspect or the fifth aspect has become a bearing ring excellent in durability capable of converting any region of the rolling contact surface to a load region. In the aforementioned bearing ring according to the fourth aspect or the fifth aspect, further, steel capable of implementing sufficiently high hardness by quench hardening and having a proper component composition capable of suppressing quench cracking while ensuring high quenchability is employed as the material. Thus, according to the bearing ring according to the fourth aspect or the fifth aspect of the present invention, a large-sized bearing ring excellent in durability can be provided.

A bearing ring according to the second aspect of the present invention includes an inner ring, an outer ring arranged to enclose the outer peripheral side of the inner ring, and a plurality of rolling elements arranged between the inner ring and the outer ring. At least either one of the inner ring and the outer ring is the aforementioned bearing ring according to the present invention.

According to the bearing ring according to the second aspect of the present invention, a large-sized bearing ring excellent in durability can be provided since the same includes the aforementioned bearing ring according to the present invention.

A main shaft connected to a blade is penetratingly fixed to the inner ring and the outer ring is fixed to a housing in a wind turbine generator, whereby the aforementioned rolling bearing according to the second aspect can be employed as a rolling bearing (rolling bearing for a wind turbine generator) rotatably supporting the main shaft with respect to the housing. The rolling bearing according to the second aspect of the present invention which is the aforementioned large-sized rolling bearing excellent in durability is suitable as the rolling bearing for a wind turbine generator.

A method for producing a rolling bearing according to the fourth aspect of the present invention is a method for producing a bearing ring of a rolling bearing. This method for producing a rolling bearing includes the steps of preparing a formed body constituted of steel, forming an annular heated region heated to a temperature of at least an A₁ point on the formed body by relatively rotating an induction heating coil arranged to face part of an annular region for becoming a rolling contact surface of the bearing ring in the formed body to induction-heat the formed body along the circumferential direction of the annular region, and simultaneously cooling the whole of the heated region to a temperature of not more than an Mₛ point. In the step of forming the heated region, the induction heating coil having such a shape that a region (induction heating region) facing the annular region and contributing to heating of the annular region is included in the same plane is employed.

In the method for producing a bearing ring according to the fourth aspect of the present invention, the induction heating coil arranged to face part of the annular region for becoming the rolling contact surface relatively rotates along the circumferential direction, whereby the heated region is formed on the formed body. Therefore, it is possible to employ an induction heating coil small with respect to the outer shape of the bearing ring. Consequently, the production cost for a quenching apparatus can be suppressed also in a case of quench-hardening a large-sized bearing ring. In the method for producing a bearing ring according to the fourth aspect of the present invention, further, the whole heated region is simultaneously cooled to the temperature of not more than the Mₛ point. Therefore, it becomes possible to simultaneously form a quench-hardened layer along the rolling contact surface over the entire circumference, and residual stress is inhibited from concentrating on a partial region.

In the method for producing a bearing ring according to the fourth aspect of the present invention, in addition, the induction heating coil having such a shape that the induction heating region is included in the same plane is employed. Also in a case of executing quenching of bearing rings having different sizes or shapes, therefore, no coils responsive to the shapes of the respective bearing rings are required, but the production cost for a quenching apparatus can be reduced. According to the method for producing a bearing ring according to the fourth aspect of the present invention, as hereinabove described, the quench-hardened layer can be homogeneously formed by induction quenching along the rolling contact surface over the entire circumference while suppressing the production cost for the quenching apparatus.

Preferably in the aforementioned method for producing a bearing ring, a plurality of induction heating coils are arranged along the circumferential direction of the formed body in the step of forming the heated region. Thus, homogeneous quench hardening can be implemented by suppressing dispersion in temperature in the circumferential direction of the rolling contact surface (annular region).

Preferably in the aforementioned method for producing a bearing ring, the plurality of induction heating coils are arranged at regular intervals along the circumferential direction of the formed body in the step of forming the heated region. Thus, more homogeneous quench hardening can be implemented by suppressing dispersion in temperature in the circumferential direction of the rolling contact surface (annular region).

Preferably in the aforementioned method for producing a bearing ring, the induction heating coil relatively rotates at least twice along the circumferential direction of the formed body in the step of forming the heated region. Thus, homogeneous quench hardening can be implemented by suppressing dispersion in temperature in the circumferential direction of the rolling contact surface (annular region).

Preferably in the aforementioned method for producing a bearing ring, temperatures on a plurality of portions of the heated region are measured in the step of forming the heated region. Thus, the quench hardening can be executed by rapidly cooling the heated region after confirming that homogeneous heating is implemented in the circumferential direction of the rolling contact surface. Consequently, homogeneous quench hardening can be implemented in the circumferential direction of the rolling contact surface.

In the aforementioned method for producing a bearing ring, a formed body constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity may be prepared in the step of preparing a formed body.

In the aforementioned method for producing a bearing ring, a formed body constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity may be prepared in the step of preparing a formed body.

Steel of such a component composition is employed as the material, whereby sufficiently high hardness can be implemented by the quench hardening, and quench cracking can be suppressed while ensuring high quenchability.

The reason why the component range of the steel constituting the formed body, i.e., the component range of the steel constituting the produced bearing ring is preferably set to the aforementioned range is now described.

Carbon: at least 0.43 mass % and not more than 0.65 mass %

The carbon content exerts a remarkable influence on the hardness of the rolling contact surface of the bearing ring after the quench hardening. If the carbon content in the steel constituting the bearing ring is less than 0.43 mass %, it may become difficult to supply sufficient hardness to the rolling contact surface after the quench hardening. If the carbon content exceeds 0.65 mass %, on the other hand, occurrence of cracking (quench cracking) at the time of the quench hardening is apprehended. Therefore, the carbon content is preferably set to at least 0.43 mass % and not more than 0.65 mass %.

Silicon: at least 0.15 mass % and not more than 0.35 mass %

Silicon contributes to improvement in temper softening resistance of the steel.

If the silicon content in the steel constituting the bearing ring is less than 0.15 mass %, the temper softening resistance becomes insufficient, and there is a possibility that the hardness of the rolling contact surface remarkably lowers due to tempering after the quench hardening or temperature rise during use of the bearing ring. If the silicon content exceeds 0.35 mass %, on the other hand, the hardness of the material before the quenching increases, and workability in cold working at the time of forming the material into the bearing ring may lower. Therefore, the silicon content is preferably set to at least 0.15 mass % and not more than 0.35 mass %.

Manganese: at least 0.60 mass % and not more than 1.10 mass %

Manganese contributes to improvement in quenchability of the steel. If the manganese content is less than 0.60 mass %, this effect is not sufficiently attained. If the manganese content exceeds 1.10 mass %, on the other hand, hardness of the material before the quenching increases, and the workability in the cold working lowers. Therefore, the manganese content is preferably set to at least 0.60 mass % and not more than 1.10 mass %.

Chromium: at least 0.30 mass % and not more than 1.20 mass %

Chromium contributes to improvement in quenchability of the steel. If the chromium content is less than 0.30 mass %, this effect is not sufficiently attained. If the chromium content exceeds 1.20 mass %, on the other hand, there arises such a problem that the material cost rises. Therefore, the chromium content is preferably set to at least 0.30 mass % and not more than 1.20 mass %.

Molybdenum: at least 0.15 mass % and not more than 0.75 mass %

Molybdenum also contributes to improvement in quenchability of the steel. If the molybdenum content is less than 0.15 mass %, this effect is not sufficiently attained. If the molybdenum content exceeds 0.75 mass %, on the other hand, there arises such a problem that the material cost rises. Therefore, the molybdenum content is preferably set to at least 0.15 mass % and not more than 0.75 mass %.

Nickel: at least 0.35 mass % and not more than 0.75 mass %

Nickel also contributes to improvement in quenchability of the steel. Nickel can be added in a case where particularly high quenchability is required to the steel constituting the bearing ring such as a case where the outer shape of the bearing ring is large. If the nickel content is less than 0.35 mass %, the effect of improving the quenchability is not sufficiently attained. If the nickel content exceeds 0.75 mass %, on the other hand, there is a possibility that the quantity of residual austenite after the quenching increases to cause reduction of the hardness, reduction of dimensional stability and the like. Therefore, nickel is preferably added to the steel constituting the bearing ring in the range of at least 0.35 mass % and not more than 0.75 mass %.

The aforementioned method for producing a bearing ring may further include a step of executing normalizing on the formed body in advance of the step of forming the heated region.

The bearing ring produced by partially quench-hardening the region including the rolling contact surface by induction quenching must have hardness capable of ensuring prescribed strength also in a region (unhardened region) not quench-hardened. In order to ensure prescribed hardness in the unhardened region, tempering may be further executed after executing quenching on the whole formed body (bearing ring) before the induction quenching. When steel having a relatively high carbon content and having a component composition exhibiting high quenchability is employed as the material, however, there is such a problem that quench cracking easily takes place. In a formed body consisting of steel having such a component composition, on the other hand, sufficient hardness can be ensured by normalizing. Therefore, proper hardness can be supplied to the unhardened region by executing normalizing in advance of the induction quenching, in place of the ensuring of the hardness by the aforementioned quenching and tempering.

In the aforementioned method for producing a bearing ring, shot blasting may be executed while the formed body is cooled, by spraying hard particles onto the formed body along with gas in the step of executing the normalizing.

Thus, the shot blasting can be executed simultaneously with air-blast cooling at the time of the normalizing. Therefore, scales formed on a surface layer portion of the formed body due to heating in the normalizing are removed, and characteristic reduction of the bearing ring resulting from formation of the scales or reduction of thermal conductivity resulting from formation of the scales is suppressed.

A method for producing a rolling bearing according to the first aspect of the present invention includes the steps of preparing a bearing ring, preparing a rolling element, and assembling a rolling bearing by combining the bearing ring and the rolling element with each other. The bearing ring is produced and prepared by the aforementioned method for producing a bearing ring according to the present invention.

The bearing ring is produced by the aforementioned method for producing a bearing ring according to the present invention, whereby a rolling bearing including a bearing ring in which a quench-hardened layer is homogeneously formed by induction quenching along a rolling contact surface over the entire circumference can be produced while suppressing the production cost for a quenching apparatus according to the method for producing a rolling bearing according to the first aspect of the present invention.

In the aforementioned method for producing a rolling bearing, the aforementioned rolling bearing may be that employed as a rolling bearing for a wind turbine generator rotatably supporting a main shaft connected to a blade with respect to a member adjacent to the main shaft in a wind turbine generator. As hereinabove described, the method for producing a rolling bearing according to the first aspect of the present invention capable of forming a quench-hardened layer on a region of a large-sized bearing ring including a rolling contact surface at a low cost is suitable as a method for producing a rolling bearing for a wind turbine generator.

A bearing ring according to a sixth aspect of the present invention is a bearing ring of a rolling bearing having an inner diameter of at least 1000 mm. This bearing ring includes a rolling contact surface quenched layer formed along a rolling contact surface which is a surface where a rolling element must roll over the entire circumference to include the rolling contact surface, a fitting surface quenched layer formed along a fitting surface fitting with another member to include the fitting surface, and an unhardened region formed between the rolling contact surface quenched layer and the fitting surface quenched layer. The thickness of the fitting surface quenched layer is smaller than the thickness of the rolling contact surface quenched layer.

In the bearing ring according to the sixth aspect of the present invention, the rolling contact surface quenched layer is formed along the rolling contact surface over the entire circumference to include the rolling contact surface. Thus, sufficient hardness is supplied to the rolling contact surface, and sufficient durability can be ensured against fatigue following rolling of the rolling element. In the bearing ring according to the sixth aspect of the present invention, further, the fitting surface quenched layer is formed along the fitting surface to include the fitting surface. Thus, sufficient hardness is supplied to the fitting surface and a sufficient interference can be ensured between the bearing ring and another member fitting with the bearing ring, whereby damage of the bearing ring caused by creeping or the like, for example, can be suppressed.

In the bearing ring according to the sixth aspect of the present invention, in addition, the unhardened region is formed between the rolling contact surface quenched layer and the fitting surface quenched layer. When steel is quench-hardened, the structure of the steel transforms into martensite. This transformation into martensite is accompanied by expansion of volume. On the other hand, the bearing ring according to the sixth aspect of the present invention includes the unhardened region not transforming into martensite, i.e., whose volume does not expand in formation of the quenched layers. Therefore, compressive stress remains in the rolling contact surface quenched layer whose volume expands in the formation of the quenched layers. This compressive stress suppresses formation or development of cracks on the rolling contact surface and in the vicinity thereof, and hence durability of the bearing ring against rolling fatigue improves. As a result of studies conducted by the inventor, further, it has been proved that the durability of the bearing ring against rolling fatigue improves by rendering the thickness of the fitting surface quenched layer smaller than the thickness of the rolling contact surface quenched layer. This is conceivably because residual compressive stress on the rolling contact surface quenched layer can be inhibited from lowering due to an influence by cubical expansion of the fitting surface quenched layer by ensuring such relation between the thicknesses of the two quenched layers. According to this recognition, the thickness of the fitting surface quenched layer has become smaller than the thickness of the rolling contact surface quenched layer in the bearing ring according to the sixth aspect of the present invention.

According to the bearing ring according to the sixth aspect of the present invention, as hereinabove described, a bearing ring of a large-sized rolling bearing in which a quench-hardened layer is formed along a rolling contact surface and durability improves can be provided.

In the aforementioned bearing ring, the aforementioned rolling contact surface quenched layer and the fitting surface quenched layer may be formed by induction quenching.

The induction quenching is suitable as a method for forming the rolling contact surface quenched layer and the fitting surface quenched layer while leaving the unhardened region in the bearing ring.

In the aforementioned bearing ring, the absolute value of the difference between the maximum value and the minimum value of a residual stress value in the circumferential direction of the rolling contact surface is not more than 20 % of the absolute value of an average value.

According to studies conducted by the inventor, occurrence of strain or quench cracking is apprehended when the absolute value of the difference between the maximum value and the minimum value of the residual stress value in the circumferential direction of the rolling contact surface exceeds 20 % of the absolute value of the average value. More specifically, a method for starting quenching in a state where two coils are arranged to be adjacent to each other and ending the quenching on a position where the same butt against each other again as described in the aforementioned Patent Literature 2, for example, can be employed as a method for forming a quench-hardened layer on a rolling contact surface of a bearing ring of a large-sized bearing over the entire circumference. If the rolling contact surface quenched layer is formed by such a method, however, residual stress following the quench hardening concentrates on the finally quenched region, and the aforementioned structure cannot be satisfied. On the other hand, occurrence of strain or quench cracking can be sufficiently suppressed by setting the absolute value of the difference between the maximum value and the minimum value of the residual stress value in the circumferential direction of the rolling contact surface to not more than 20 % of the absolute value of the average value. Such a state of the residual stress value can be achieved through a process of simultaneously cooling the whole region to a temperature of not more than an Mₛ point in a state of heating the region including the rolling contact surface to a temperature of at least an A₁ point over the entire circumference, for example. Measurement of the residual stress can be executed with an X-ray stress measuring apparatus, for example.

The aforementioned bearing ring may be constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity.

Alternatively, the aforementioned bearing ring may be constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity.

The steel of such a component composition is so employed as the material that sufficiently high hardness can be implemented by quench hardening and quench cracking can be suppressed while ensuring high quenchability.

The reason why the steel constituting the bearing ring preferably has the aforementioned component range is now described.

Carbon: at least 0.43 mass % and not more than 0.65 mass %

The carbon content exerts a remarkable influence on the hardness of the rolling contact surface of the bearing ring after the quench hardening. If the carbon content in the steel constituting the bearing ring is less than 0.43 mass %, it may become difficult to supply sufficient hardness to the rolling contact surface after the quench hardening. If the carbon content exceeds 0.65 mass %, on the other hand, occurrence of cracking (quench cracking) at the time of the quench hardening is apprehended. Therefore, the carbon content is preferably set to at least 0.43 mass % and not more than 0.65 mass %.

Silicon: at least 0.15 mass % and not more than 0.35 mass %

Silicon contributes to improvement in temper softening resistance of the steel.

If the silicon content in the steel constituting the bearing ring is less than 0.15 mass %, the temper softening resistance becomes insufficient, and there is a possibility that the hardness of the rolling contact surface remarkably lowers due to tempering after the quench hardening or temperature rise during use of the bearing ring. If the silicon content exceeds 0.35 mass %, on the other hand, the hardness of the material before the quenching increases, and workability in cold working at the time of forming the material into the bearing ring may lower. Therefore, the silicon content is preferably set to at least 0.15 mass % and not more than 0.35 mass %.

Manganese: at least 0.60 mass % and not more than 1.10 mass %

Manganese contributes to improvement in quenchability of the steel. If the manganese content is less than 0.60 mass %, this effect is not sufficiently attained. If the manganese content exceeds 1.10 mass %, on the other hand, hardness of the material before the quenching increases, and the workability in the cold working lowers. Therefore, the manganese content is preferably set to at least 0.60 mass % and not more than 1.10 mass %.

Chromium: at least 0.30 mass % and not more than 1.20 mass %

Chromium contributes to improvement in quenchability of the steel. If the chromium content is less than 0.30 mass %, this effect is not sufficiently attained. If the chromium content exceeds 1.20 mass %, on the other hand, there arises such a problem that the material cost rises. Therefore, the chromium content is preferably set to at least 0.30 mass % and not more than 1.20 mass %.

Molybdenum: at least 0.15 mass % and not more than 0.75 mass %

Molybdenum also contributes to improvement in quenchability of the steel. If the molybdenum content is less than 0.15 mass %, this effect is not sufficiently attained. If the molybdenum content exceeds 0.75 mass %, on the other hand, there arises such a problem that the material cost rises. Therefore, the molybdenum content is preferably set to at least 0.15 mass % and not more than 0.75 mass %.

Nickel: at least 0.35 mass % and not more than 0.75 mass %

Nickel also contributes to improvement in quenchability of the steel. Nickel can be added in a case where particularly high quenchability is required to the steel constituting the bearing ring such as a case where the outer shape of the bearing ring is large. If the nickel content is less than 0.35 mass %, the effect of improving the quenchability is not sufficiently attained. If the nickel content exceeds 0.75 mass %, on the other hand, there is a possibility that the quantity of residual austenite after the quenching increases to cause reduction of the hardness, reduction of dimensional stability and the like. Therefore, nickel is preferably added to the steel constituting the bearing ring in the range of at least 0.35 mass % and not more than 0.75 mass %.

A bearing ring according to the second aspect of the present invention includes an inner ring, an outer ring arranged to enclose the outer peripheral side of the inner ring, and a plurality of rolling elements arranged between the inner ring and the outer ring. At least either one of the inner ring and the outer ring is the aforementioned bearing ring according to the present invention.

According to the bearing ring according to the second aspect of the present invention, a large-sized rolling bearing excellent in durability can be provided since the same includes the aforementioned bearing ring according to the present invention.

A main shaft connected to a blade is penetratingly fixed to the inner ring and the outer ring is fixed to a housing in a wind turbine generator, whereby the aforementioned rolling bearing can be employed as a rolling bearing (rolling bearing for a wind turbine generator) rotatably supporting the main shaft with respect to the housing. The rolling bearing according to the second aspect of the present invention which is the aforementioned large-sized rolling bearing excellent in durability is suitable as a rolling bearing for a wind turbine generator.

A method for producing a bearing ring according to the fifth aspect of the present invention is a method for producing a bearing ring of a rolling bearing. This method for producing a bearing ring includes the steps of preparing a formed body constituted of steel, forming an annular heated region heated to a temperature of at least an A₁ point on the formed body by relatively rotating an induction heating member arranged to face part of an annular region for becoming a rolling contact surface of the bearing ring in the formed body to induction-heat the formed body along the circumferential direction of the annular region, forming a rolling contact surface quenched layer along the annular region over the entire circumference by simultaneously cooling the whole of the heated region to a temperature of not more than an Mₛ point, and forming a fitting surface quenched layer by relatively moving another induction heating member arranged to face part of a region for becoming a fitting surface of the bearing ring in the formed body to induction-heat the formed body along the circumferential direction of the region for becoming the fitting surface while cooling the region heated by the other induction heating member with a cooling member following the other induction heating member.

In the method for producing a bearing ring according to the fifth aspect of the present invention, the induction heating member arranged to face part of the annular region for becoming the rolling contact surface relatively rotates along the circumferential direction, whereby the heated region is formed on the formed body. Therefore, an induction heating member small with respect to the outer shape of the bearing ring can be employed. Consequently, the production cost for a quenching apparatus can be suppressed also in a case of quench-hardening a large-sized bearing ring. In the method for producing a bearing ring according to the fifth aspect of the present invention, further, the whole heated region is simultaneously cooled to the temperature of not more than the Mₛ point. Therefore, it becomes possible to simultaneously form a quench-hardened layer along the rolling contact surface over the entire circumference, and residual stress is inhibited from concentrating on a partial region.

In the method for producing a bearing ring according to the fifth aspect of the present invention, in addition, the fitting surface quenched layer is formed by relatively moving the other induction heating member arranged to face part of the region for becoming the fitting surface to induction-heat the formed body along the circumferential direction of the region for becoming the fitting surface while cooling the region heated by the other induction heating member with the cooling member following the other induction heating member. The fitting surface may not necessarily be provided with a quench-hardened layer over the entire circumference dissimilarly to the rolling contact surface, but a region not provided with the quench-hardened layer may be partially formed in the circumferential direction. Therefore, it is possible to form the fitting surface quenched layer by transfer quenching as described above. In the aforementioned transfer quenching, the region heated by the induction heating member is cooled by the cooling member immediately after the heating, whereby the previously formed rolling contact surface quenched layer is inhibited from being tempered and reduced in hardness by the heating in the formation of the fitting surface quenched layer.

Thus, according to the method for producing a bearing ring according to the fifth aspect of the present invention, the quench-hardened layer can be homogeneously formed by induction quenching along the rolling contact surface over the entire circumference while suppressing the production cost for a quenching apparatus, and the quench-hardened layer can be formed also on the fitting surface while suppressing reduction in hardness of the rolling contact surface.

The aforementioned method for producing a bearing ring may further include a step of executing normalizing on the formed body in advance of the step of forming the heated region.

The bearing ring produced by partially quench-hardening the region including the rolling contact surface and the region including the fitting surface by induction quenching must have hardness capable of ensuring prescribed strength also in a region (unhardened region) not quench-hardened. In order to ensure prescribed hardness in the unhardened region, tempering may be further executed after executing quenching on the whole formed body (bearing ring) before the induction quenching. When steel having a relatively high carbon content and a component composition exhibiting high quenchability is employed as the material, however, there is such a problem that quench cracking easily takes place. In the formed body consisting of the steel having such a component composition, on the other hand, sufficient hardness can be ensured by normalizing. Therefore, proper hardness can be supplied to the unhardened region by executing normalizing in advance of the induction quenching, in place of the ensuring of the hardness by the aforementioned quenching and tempering.

In the aforementioned method for producing a bearing ring, shot blasting may be executed while the formed body is cooled, by spraying hard particles onto the formed body along with gas in the step of executing the normalizing.

Thus, the shot blasting can be executed simultaneously with air-blast cooling at the time of the normalizing. Therefore, scales formed on a surface layer portion of the formed body due to heating in the normalizing are removed, and characteristic reduction of the bearing ring resulting from formation of the scales or reduction of thermal conductivity resulting from formation of the scales is suppressed.

In the aforementioned method for producing a bearing ring, the bearing ring may include double rows of rolling contact surfaces. In this case, double rows of heated regions are preferably simultaneously cooled to the temperature of not more than the Mₛ point in the step of forming the rolling contact surface quenched layer.

When forming a rolling contact surface quenched layer on one rolling contact surface and thereafter forming a rolling contact surface quenched layer on another rolling contact surface in the case where the bearing ring includes the double rows of rolling contact surfaces, there is a possibility that the previously formed rolling contact surface quenched layer is tempered by heating following the formation of the subsequently formed rolling contact surface quenched layer, to reduce the hardness. With respect to this, the double rows of heated regions are simultaneously cooled to the temperature of not more than the Mₛ point and the rolling contact surface quenched layers are formed, whereby reduction of the hardness of the aforementioned rolling contact surface quenched layers is avoided.

In the aforementioned method for producing a bearing ring, the induction heating member may relatively rotate at least twice along the circumferential direction of the formed body in the step of forming the heated region. Thus, homogeneous quench hardening can be implemented by suppressing dispersion in temperature in the circumferential direction of the rolling contact surface.

In the aforementioned method for producing a bearing ring, a plurality of induction heating members may be arranged along the circumferential direction of the formed body in the step of forming the heated region. Thus, homogeneous quench hardening can be implemented by suppressing dispersion in temperature in the circumferential direction of the rolling contact surface.

In the aforementioned method for producing a bearing ring, temperatures on a plurality of portions of the heated region may be measured in the step of forming the heated region. Thus, the quench hardening can be executed by performing rapid cooling after confirming that homogeneous heating is implemented in the circumferential direction of the rolling contact surface. Consequently, homogeneous quench hardening can be implemented in the circumferential direction of the rolling contact surface.

In the aforementioned method for producing a bearing ring, a formed body constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity may be prepared in the step of preparing a formed body.

In the aforementioned method for producing a bearing ring, a formed body constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity may be prepared in the step of preparing a formed body.

Steel of such a component composition is employed as the material, whereby sufficiently high hardness can be implemented by the quench hardening, and quench cracking can be suppressed while ensuring high quenchability.

The reason why the component range of the steel constituting the formed body, i.e., the component range of the steel constituting the produced bearing ring is preferably set to the aforementioned range is now described.

Carbon: at least 0.43 mass % and not more than 0.65 mass %

The carbon content exerts a remarkable influence on the hardness of the rolling contact surface of the bearing ring after the quench hardening. If the carbon content in the steel constituting the bearing ring is less than 0.43 mass %, it may become difficult to supply sufficient hardness to the rolling contact surface after the quench hardening. If the carbon content exceeds 0.65 mass %, on the other hand, occurrence of cracking (quench cracking) at the time of the quench hardening is apprehended. Therefore, the carbon content is preferably set to at least 0.43 mass % and not more than 0.65 mass %.

Silicon: at least 0.15 mass % and not more than 0.35 mass %

Silicon contributes to improvement in temper softening resistance of the steel. If the silicon content in the steel constituting the bearing ring is less than 0.15 mass %, the temper softening resistance becomes insufficient, and there is a possibility that the hardness of the rolling contact surface remarkably lowers due to tempering after the quench hardening or temperature rise during use of the bearing ring. If the silicon content exceeds 0.35 mass %, on the other hand, the hardness of the material before the quenching increases, and workability in cold working at the time of forming the material into the bearing ring may lower. Therefore, the silicon content is preferably set to at least 0.15 mass % and not more than 0.35 mass %.

Manganese: at least 0.60 mass % and not more than 1.10 mass %

Manganese contributes to improvement in quenchability of the steel. If the manganese content is less than 0.60 mass %, this effect is not sufficiently attained. If the manganese content exceeds 1.10 mass %, on the other hand, hardness of the material before the quenching increases, and the workability in the cold working lowers. Therefore, the manganese content is preferably set to at least 0.60 mass % and not more than 1.10 mass %.

Chromium: at least 0.30 mass % and not more than 1.20 mass %

Chromium contributes to improvement in quenchability of the steel. If the chromium content is less than 0.30 mass %, this effect is not sufficiently attained. If the chromium content exceeds 1.20 mass %, on the other hand, there arises such a problem that the material cost rises. Therefore, the chromium content is preferably set to at least 0.30 mass % and not more than 1.20 mass %.

Molybdenum: at least 0.15 mass % and not more than 0.75 mass %

Molybdenum also contributes to improvement in quenchability of the steel. If the molybdenum content is less than 0.15 mass %, this effect is not sufficiently attained. If the molybdenum content exceeds 0.75 mass %, on the other hand, there arises such a problem that the material cost rises. Therefore, the molybdenum content is preferably set to at least 0.15 mass % and not more than 0.75 mass %.

Nickel: at least 0.35 mass % and not more than 0.75 mass %

Nickel also contributes to improvement in quenchability of the steel. Nickel can be added in a case where particularly high quenchability is required to the steel constituting the bearing ring such as a case where the outer shape of the bearing ring is large. If the nickel content is less than 0.35 mass %, the effect of improving the quenchability is not sufficiently attained. If the nickel content exceeds 0.75 mass %, on the other hand, there is a possibility that the quantity of residual austenite after the quenching increases to cause reduction of the hardness, reduction of dimensional stability and the like. Therefore, nickel is preferably added to the steel constituting the bearing ring in the range of at least 0.35 mass % and not more than 0.75 mass %.

A method for producing a rolling bearing according to the second aspect of the present invention includes the steps of preparing a bearing ring, preparing a rolling element, and assembling a rolling bearing by combining the bearing ring and the rolling element with each other. The bearing ring is produced by the aforementioned method for producing a bearing ring according to the present invention.

The bearing ring is produced by the aforementioned method for producing a bearing ring according to the present invention, whereby a rolling bearing including a bearing ring in which a quench-hardened layer is homogeneously formed by induction quenching along a rolling contact surface over the entire circumference and a quench-hardened layer is formed also on a fitting surface while suppressing reduction in hardness of the rolling contact surface can be produced at a low cost.

In the aforementioned method for producing a rolling bearing, the aforementioned rolling bearing may be that employed as a rolling bearing for a wind turbine generator rotatably supporting a main shaft connected to a blade with respect to a member adjacent to the main shaft in a wind turbine generator. As hereinabove described, the method for producing a rolling bearing according to the second aspect of the present invention capable of forming quench-hardened layers on regions of a large-sized bearing ring including a rolling contact surface and a fitting surface at a low cost is suitable as a method for producing a rolling bearing for a wind turbine generator.

### BRIEF DESCRIPTION OF DRAWINGS

Fig. 1 is a flow chart showing an outline of a method for producing an inner ring of a rolling bearing.
Fig. 2 is a schematic diagram for illustrating a quench hardening step.
Fig. 3 is a schematic sectional view showing a section taken along the line segment III-III in Fig. 2.
Fig. 4 is a schematic diagram for illustrating a quench hardening step in a second embodiment.
Fig. 5 is a schematic diagram showing the structure of a wind turbine generator including a rolling bearing for a wind turbine generator.
Fig. 6 is a schematic sectional view showing the periphery of a main shaft bearing in Fig. 5 in an enlarged manner.
Fig. 7 is a flow chart showing an outline of another method for producing an inner ring of a rolling bearing.
Fig. 8 is a schematic diagram for illustrating a quench hardening step.
Fig. 9 is a schematic sectional view showing a section taken along the line segment IX-IX in Fig. 8.
Fig. 10 is a schematic diagram for illustrating a quench hardening step in a fifth embodiment.
Fig. 11 is a schematic diagram for illustrating a quench hardening step in a sixth embodiment.
Fig. 12 is a schematic diagram showing the structure of another wind turbine generator including a rolling bearing for a wind turbine generator.
Fig. 13 is a schematic sectional view showing the periphery of a main shaft bearing in Fig. 12 in an enlarged manner.
Fig. 14 is a flow chart showing an outline of a method for producing a bearing ring of a rolling bearing and the rolling bearing.
Fig. 15 is a schematic diagram for illustrating a quench hardening step.
Fig. 16 is a schematic sectional view showing a section taken along the line segment XVI-XVI in Fig. 15.
Fig. 17 is a schematic diagram for illustrating a quench hardening step in a ninth embodiment.
Fig. 18 is a schematic diagram for illustrating a quench hardening step in a tenth embodiment.
Fig. 19 is a schematic diagram showing the structure of still another wind turbine generator including a rolling bearing for a wind turbine generator.
Fig. 20 is a schematic sectional view showing the periphery of a main shaft bearing in Fig. 19 in an enlarged manner.
Fig. 21 is a schematic sectional view showing the structure of a double-row tapered roller bearing.
Fig. 22 is a schematic partially fragmented sectional view showing a principal part of Fig. 21 in an enlarged manner.
Fig. 23 is a flow chart showing an outline of a method for producing a bearing ring and a rolling bearing.
Fig. 24 is a schematic diagram for illustrating a rolling contact surface quench hardening step.
Fig. 25 is a schematic sectional view showing a section taken along the line segment XXV-XXV in Fig. 24.
Fig. 26 is a schematic diagram for illustrating a fitting surface quench hardening step.
Fig. 27 is a schematic diagram showing the structure of a further wind turbine generator including a rolling bearing for a wind turbine generator.
Fig. 28 is a schematic sectional view showing the periphery of a main shaft bearing in Fig. 27 in an enlarged manner.
Fig. 29 is a flow chart showing an outline of a method for producing an outer ring of a rolling bearing and the rolling bearing.
Fig. 30 is a schematic diagram for illustrating a rolling contact surface quench hardening step.
Fig. 31 is a schematic sectional view showing a section taken along the line segment XXXI-XXXI in Fig. 30.
Fig. 32 is a schematic diagram for illustrating a fitting surface quench hardening step.
Fig. 33 is a schematic sectional view showing a section taken along the line segment XXXIII-XXXIII in Fig. 32.
Fig. 34 is a schematic sectional view showing the structure of a double-row tapered rolling bearing.
Fig. 35 is a schematic partially fragmented sectional view showing a principal part of Fig. 34 in an enlarged manner.
Fig. 36 is a schematic diagram for illustrating a quench hardening step in a fifteenth embodiment.
Fig. 37 is a schematic diagram for illustrating a quench hardening step in a sixteenth embodiment.
Fig. 38 is a schematic diagram showing the structure of a further wind turbine generator including a rolling bearing for a wind turbine generator.
Fig. 39 is a schematic sectional view showing the periphery of a main shaft bearing in Fig. 38 in an enlarged manner.
Fig. 40 is a diagram showing residual stress distribution in a depth direction around a rolling contact surface.
Fig. 41 is a diagram showing hardness distribution in the depth direction around the rolling contact surface.

### DESCRIPTION OF EMBODIMENTS

Embodiments of the present invention are now described with reference to the drawings. In the following drawings, the same reference numerals are assigned to identical or corresponding portions, and redundant description is not repeated.

### (First Embodiment)

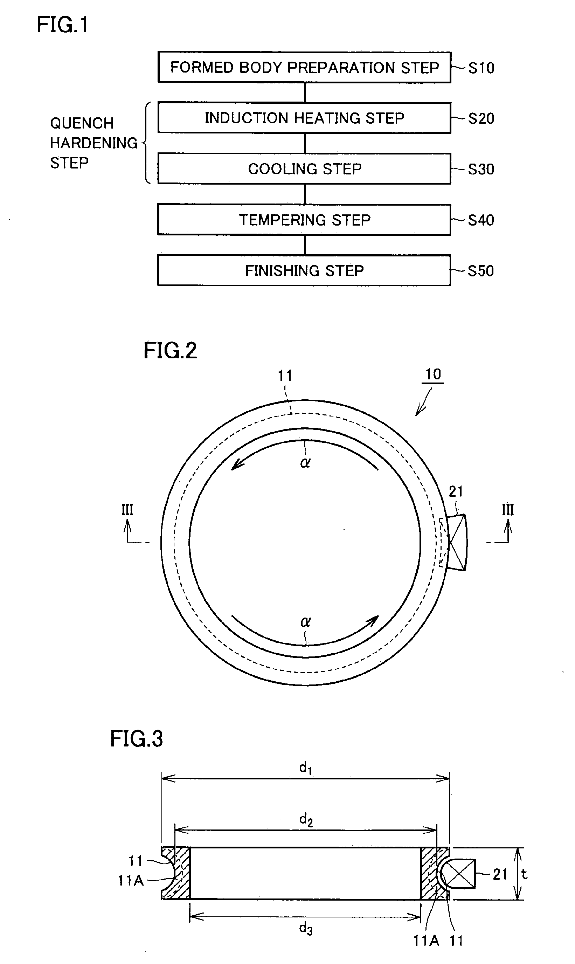

First, a first embodiment which is an embodiment of the present invention is described with reference to a method for producing a bearing ring (inner ring) of a rolling bearing which is a ring-shaped member. Referring to Fig. 1, a formed body preparation step is first carried out as a step (S10) in the method for producing an inner ring according to this embodiment. In this step (S10), a steel stock of JIS S53C, for example, is prepared, and working such as forging or turning is executed, whereby a formed body having a shape responsive to a desired shape of an inner ring is prepared.

Then, referring to Fig. 1, a quench hardening step is carried out. This quench hardening step includes an induction heating step carried out as a step (S20) and a cooling step carried out as a step (S30). In the step (S20), referring to Figs. 2 and 3, a coil 21 as an induction heating member is arranged to face part of a rolling contact surface 11 which is a surface where a rolling element must roll in a formed body 10 prepared in the step (S10). A surface of coil 21 opposed to rolling contact surface 11 has a shape along rolling contact surface 11, as shown in Fig. 3. Then, formed body 10 is rotated on a central axis, more specifically in a direction of arrow α, while a high-frequency current is supplied to coil 21 from a power source (not shown). Thus, a surface layer region of formed body 10 including rolling contact surface 11 is induction-heated to a temperature of at least an A₁ point, and an annular heated region 11A along rolling contact surface 11 is formed.

Then, in the step (S30), water as a cooling liquid, for example, is injected toward the whole of formed body 10 including heated region 11A formed in the step (S20), whereby the whole of heated region 11A is simultaneously cooled to a temperature of not more than an Mₛ point. Thus, heated region 11A transforms into martensite, and hardens. Through the aforementioned procedure, induction quenching is executed, and the quench hardening step is completed.

Then, a tempering step is carried out as a step (S40). In this step (S40), formed body 10 quench-hardened in the steps (S20) and (S30) is charged into a furnace, for example, heated to a temperature of not more than the A₁ point and retained for a prescribed time, whereby tempering is executed.

Then, a finishing step is carried out as a step (S50). In this step (S50), finishing such as polishing is executed on rolling contact surface 11, for example. Through the aforementioned process, an inner ring of a rolling bearing is completed, and production of the inner ring according to this embodiment is completed.

In this embodiment, coil 21 arranged to face part of formed body 10 is relatively rotated along the circumferential direction in the step (S20), whereby heated region 11A is formed on formed body 10. Therefore, it is possible to employ coil 21 small with respect to the outer shape of formed body 10, and the production cost for a quenching apparatus can be suppressed also in a case of quench-hardening large-sized formed body 10. In this embodiment, further, the whole of heated region 11A is simultaneously cooled to the temperature of not more than the Mₛ point. Therefore, it becomes possible to form an annular quench-hardened region homogeneous in the circumferential direction, and residual stress is inhibited from concentrating on a partial region. Consequently, the method for producing an inner ring according to the present invention has become a method for producing a ring-shaped member capable of forming an annular quench-hardened region homogeneous in the circumferential direction while suppressing the production cost for a quenching apparatus.

While formed body 10 may simply rotate at least once in the aforementioned step (S20), the same preferably rotates a plurality of times, in order to implement more homogeneous quench hardening by suppressing dispersion in temperature in the circumferential direction. In other words, coil 21 as an induction heating member preferably relatively rotates at least twice along the circumferential direction of formed body 10.

### (Second Embodiment)

A second embodiment which is another embodiment of the present invention is now described. A method for producing an inner ring as a ring-shaped member according to the second embodiment is basically carried out similarly to the case of the first embodiment, and attains similar effects. However, the method for producing an inner ring according to the second embodiment is different from the case of the first embodiment in arrangement of coils 21 in a step (S20).

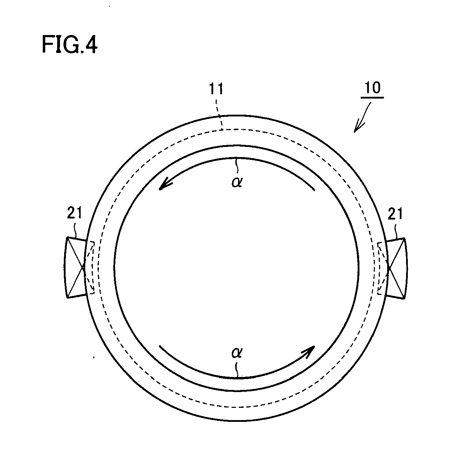

In other words, referring to Fig. 4, a pair of coils 21 are arranged to hold a formed body 10 therebetween in the step (S20) in the second embodiment. Then, formed body 10 is rotated in a direction of arrow α, while a high-frequency current is supplied to coils 21 from a power source (not shown). Thus, a surface layer region of formed body 10 including a rolling contact surface 11 is induction-heated to a temperature of at least an A₁ point, and an annular heated region 11A along rolling contact surface 11 is formed.

Thus, plurality of (in this embodiment two) coils 21 are arranged along the circumferential direction of formed body 10, whereby the method for producing an inner ring of a rolling bearing according to the second embodiment has become a method for producing a ring-shaped member capable of implementing homogeneous quench hardening by suppressing dispersion in temperature in the circumferential direction.

While the case of fixing coils 21 and rotating formed body 10 has been described in the aforementioned embodiment, coils 21 may be rotated in the circumferential direction of formed body 10 while fixing formed body 10, or coils 21 may be relatively rotated along the circumferential direction of formed body 10 by rotating both of coils 21 and formed body 10. However, wires or the like supplying the current to coils 21 are necessary for coils 21, and hence it is for the most part rational to fix coils 21 as described above.

While a case where heat treatment and production of an inner ring of a radial rolling bearing as an example of a ring-shaped member are executed has been described in the aforementioned embodiment, a ring-shaped member to which the present invention is applicable is not restricted to this, but may be an outer ring of a radial roller bearing or a bearing ring of a thrust bearing, for example. Further, the ring-shaped member to which the present invention is applicable is not restricted to the bearing ring of the bearing, but the present invention can be applied to heat treatment and production of various ring-shaped members made of steel. In a case of heating an outer ring of a radial roller bearing, for example, in the step (S20), coils 21 may be arranged to face a rolling contact surface formed on an inner peripheral side of a formed body. In a case of heating a bearing ring of a thrust rolling bearing, for example, in the step (S20), coils 21 may be arranged to face a rolling contact surface formed on an end surface side of a formed body.

While a case where partial quenching of quench-hardening only the surface layer portion of the bearing ring of the rolling bearing including the rolling contact surface is executed by utilizing the characteristic of induction quenching capable of partially quench-hardening a treated object has been described in the aforementioned embodiment, the present invention is not only applicable to the partial quenching, but also applicable to a case of quench-hardening the whole of a bearing ring, for example.

While the length of coils 21 as induction heating members in the circumferential direction of formed body 10 which is the ring-shaped member can be so properly decided as to efficiently implement homogeneous heating, the same can be set to about 1/12 of the length of the region to be heated, i.e., a length of such a degree that a central angle with respect to the central axis of the ring-shaped member becomes 30°, for example.

Further, specific conditions for the induction quenching in the present invention can be properly set in consideration of conditions such as the size and the thickness of and the material for the ring-shaped member (formed body), the capacity of the power source and the like. More specifically, proper quenching can be achieved in a case of induction-quenching a surface layer portion of a formed body of JIS S53 having an outer shape of φ2000 mm, an inner diameter of φ1860 mm and a width t of 100 mm, for example, by setting the rotational speed of the formed body, the frequency of the power source and the total heat value by induction heating to 30 rpm, 3 kHz and 250 kW respectively.

In order to suppress dispersion in temperature in the circumferential direction, a step of retaining the formed body in a state where the heating is stopped is preferably provided after completion of the induction heating and before the cooling to the temperature of not more than the Mₛ point. More specifically, dispersion in temperature in the circumferential direction on the surface of the heated region can be suppressed to about not more than 20°C by retaining the same in the state where the heating is stopped for three seconds after completion of the heating, for example, under the aforementioned conditions of the shape of the formed body and the heating.

### (Third Embodiment)

A third embodiment in which ring-shaped members according to the present invention are employed as bearing rings constituting bearings for a wind turbine generator (rolling bearings for a wind turbine generator) is now described.

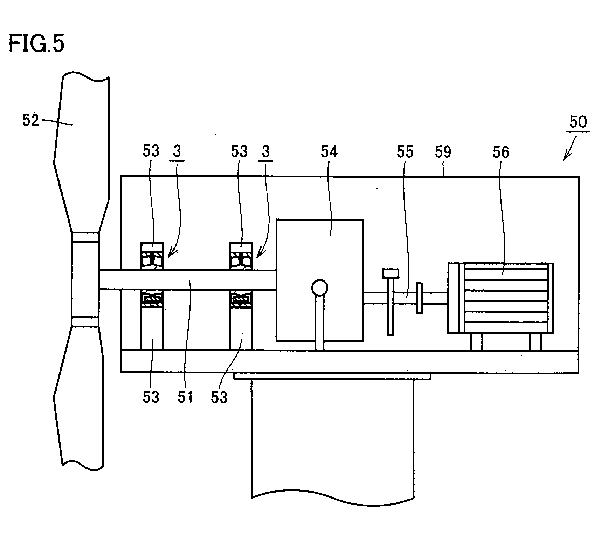

Referring to Fig. 5, a wind turbine generator 50 includes a blade 52 which is a swirler, a main shaft 51 connected to blade 52 on one end to include a center shaft of blade 52, and a speed increaser 54 connected to another end of main shaft 51. Further, speed increaser 54 includes an output shaft 55, and output shaft 55 is connected to a generator 56. Main shaft 51 is supported by main shaft bearings 3 which are rolling bearings for a wind turbine generator, to be rotatable on an axis. A plurality of (in Fig. 5 two) main shaft bearings 3 are arranged in line in the axial direction of main shaft 51, and held by housings 53 respectively. Main shaft bearings 3, housings 53, speed increaser 54 and generator 56 are stored in a nacelle 59 which is a machinery room. Main shaft 51 protrudes from nacelle 59 on one end, and is connected to blade 52.

Operation of wind turbine generator 50 is now described. Referring to Fig. 5, when blade 52 rotates in the circumferential direction by receiving wind power, main shaft 51 connected to blade 52 rotates on the axis while being supported by main shaft bearings 3 with respect to housings 53. The rotation of main shaft 51 is transmitted to speed increaser 54 to be speeded up, and converted to rotation of output shaft 55 on an axis. The rotation of output shaft 55 is transmitted to generator 56, and electromotive force is so generated by electromagnetic induction that power generation is achieved.

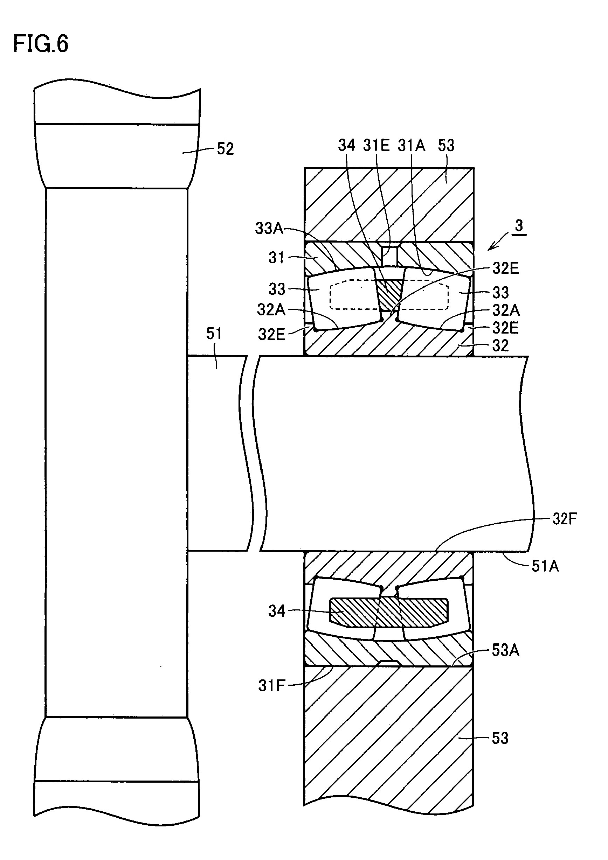

A support structure for main shaft 51 of wind turbine generator 50 is now described. Referring to Fig. 6, each main shaft bearing 3 as a rolling bearing for a wind turbine generator includes an annular outer ring 31 as a bearing ring of the rolling bearing for a wind turbine generator, an annular inner ring 32 as another bearing ring of the rolling bearing for a wind turbine generator arranged on the inner peripheral side of outer ring 31, and a plurality of rollers 33 arranged between outer ring 31 and inner ring 32 and held by an annular cage 34. An outer ring rolling contact surface 31A is formed on the inner peripheral surface of outer ring 31, and two inner ring rolling contact surfaces 32A are formed on the outer peripheral surface of inner ring 32. Outer ring 31 and inner ring 32 are so arranged that two inner ring rolling contact surfaces 32A are opposed to outer ring rolling contact surface 31A. Further, plurality of rollers 33 are in contact with outer ring rolling contact surface 31A and inner ring rolling contact surfaces 32A on roller contact surfaces 33A along the respective ones of two inner ring rolling contact surfaces 32A, and held by cage 34 and arranged at a prescribed pitch in the circumferential direction, to be rollably held on double rows (two rows) of annular raceways. A through-hole 31E passing through outer ring 31 in the radial direction is formed in outer ring 31. A lubricant can be supplied to a space between outer ring 31 and inner ring 32 through this through-hole 31E. Outer ring 31 and inner ring 32 of main shaft bearing 3 are mutually relatively rotatable, due to the aforementioned structure.

On the other hand, main shaft 51 connected to blade 52 passes through inner ring 32 of main shaft bearing 3, is in contact with an inner peripheral surface 32F of the inner ring on an outer peripheral surface 51A, and fixed to inner ring 32. Outer ring 31 of main shaft bearing 3 is fitted to come into contact with an inner wall 53A of a through-hole formed in housing 53 on an outer peripheral surface 31F, and fixed to housing 53. Main shaft 51 connected to blade 52 is rotatable on the axis with respect to outer ring 31 and housing 53 integrally with inner ring 32, due to the aforementioned structure.

Further, flange portions 32E protruding toward outer ring 31 are formed on both ends of inner ring rolling contact surfaces 32A in the width direction. Thus, a load in the axial direction (axial direction) of main shaft 51 caused by blade 52 receiving wind is supported. Outer ring rolling contact surface 31A has a spherical surface shape. Therefore, outer ring 31 and inner ring 32 can mutually form an angle while centering on the center of this spherical surface on a section perpendicular to the rolling direction of rollers 33. In other words, main shaft bearing 3 is a double-row self-aligning roller bearing. Consequently, even in a case where main shaft 51 is deflected due to blade 52 receiving wind, housing 53 can stably rotatably hold main shaft 51 through main shaft bearing 3.

Outer ring 31 and inner ring 32 as bearing rings of a rolling bearing for a wind turbine generator according to the third embodiment are produced by the method for producing a ring-shaped member according to the aforementioned first or second embodiment, for example. Outer ring 31 and inner ring 32 are bearing rings of a rolling bearing for a wind turbine generator having inner diameters of at least 1000 mm. Quench-hardened layers of outer ring rolling contact surface 31A and inner ring rolling contact surfaces 32A which are surfaces where rolling elements roll are formed by induction quenching with uniform depths over the entire circumferences. In other words, outer ring 31 and inner ring 32 have inner diameters of at least 1000 mm, and have quench-hardened layers, formed by induction quenching, of annular shapes along the circumferential direction having uniform depths, and the surfaces of the quench-hardened layers form outer ring rolling contact surface 31A and inner ring rolling contact surfaces 32A respectively. Consequently, aforementioned outer ring 31 and inner ring 32 have become large-sized bearing rings in which annular quench-hardened regions homogeneous in the circumferential direction are formed to include rolling contact surfaces while the cost for heat treatment is suppressed, and have become bearing rings constituting a bearing for a wind turbine generator usable also in a severe environment.

### (Fourth Embodiment)

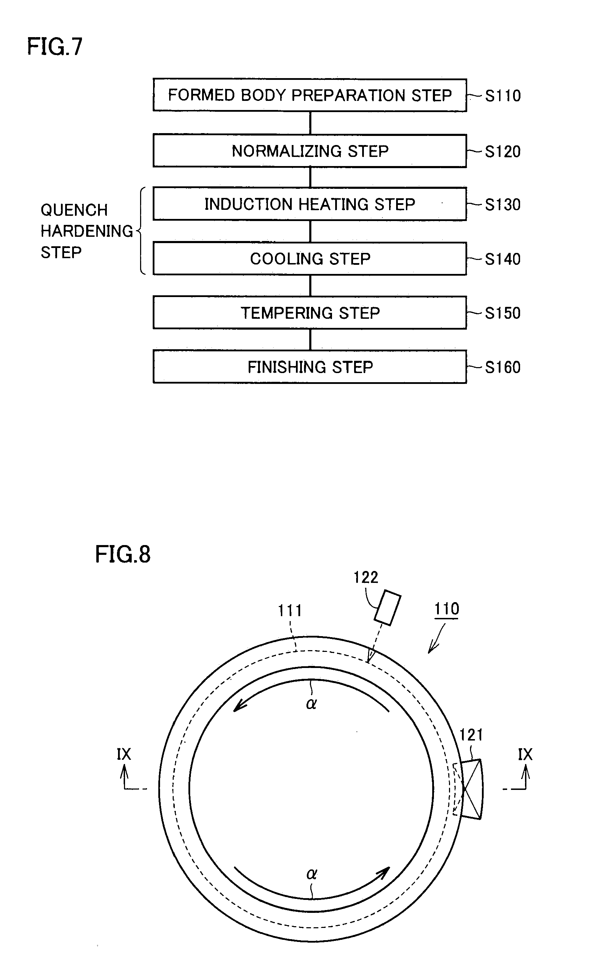

A fourth embodiment of the present invention is now described with reference to a method for producing an inner ring which is a bearing ring of a rolling bearing. Referring to Fig. 7, a formed body preparation step is first carried out as a step (S110) in the method for producing an inner ring according to this embodiment. In this step (S110), a steel stock containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity is prepared and working such as forging or turning is executed, whereby a formed body having a shape responsive to a desired shape of an inner ring is prepared. More specifically, a formed body responsive to the shape of an inner ring having an inner diameter of at least 1000 mm is prepared. When the inner ring to be produced is particularly large and higher quenchability is required to steel, a steel stock to which at least 0.35 mass % and not more than 0.75 mass % of nickel is added in addition to the aforementioned alloy components may be employed. As steel satisfying the aforementioned component composition, JIS SUP13, SCM 445, SAE standard 8660H or the like can be listed, for example.

Then, a normalizing step is carried out as a step (S120). In this step (S120), the formed body prepared in the step (S110) is heated to a temperature of at least a transformation A₁ point and thereafter cooled to a temperature of less than the transformation A₁ point, whereby normalizing is executed. At this time, a cooling rate in the cooling in the normalizing may simply be a cooling rate at which the steel constituting the formed body does not transform into martensite, i.e., a cooling rate of less than a critical cooling rate. Hardness of the formed body after the normalizing becomes high when this cooling rate increases, and becomes low when the cooling rate decreases. Therefore, desired hardness can be supplied to the formed body by adjusting the cooling rate.

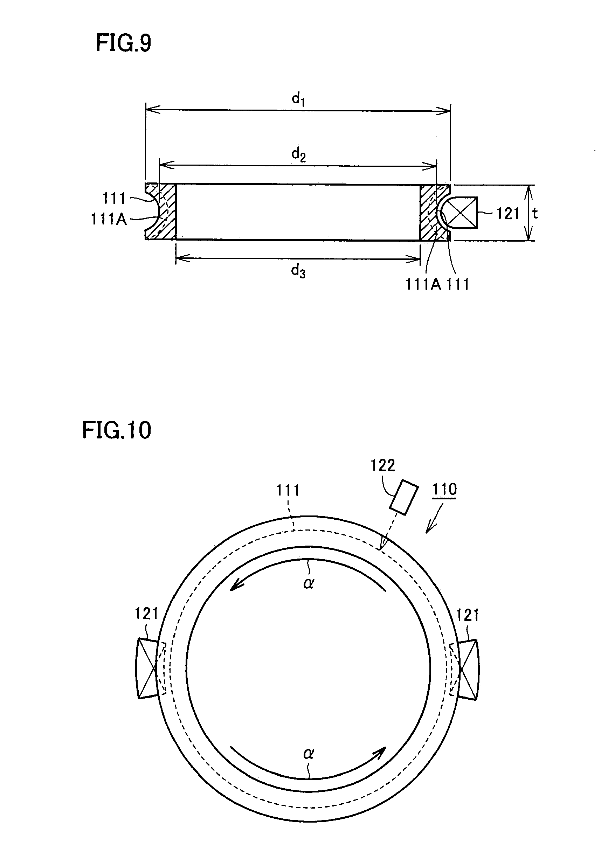

Then, referring to Fig. 7, a quench hardening step is carried out. This quench hardening step includes an induction heating step carried out as a step (S130) and a cooling step carried out as a step (S140). In the step (S130), referring to Figs. 8 and 9, a coil 121 as an induction heating member is arranged to face part of a rolling contact surface 111 (annular region) which is a surface where a rolling element must roll in a formed body 110. A surface of coil 121 opposed to rolling contact surface 111 has a shape along rolling contact surface 111, as shown in Fig. 9. Then, formed body 110 is rotated on a central axis, more specifically in a direction of arrow α, while a high-frequency current is supplied to coil 121 from a power source (not shown). Thus, a surface layer region of formed body 110 including rolling contact surface 111 is induction-heated to a temperature of at least the A₁ point, and an annular heated region 111A along rolling contact surface 111 is formed. At this time, the temperature on the surface of rolling contact surface 111 is measured with a thermometer 122 such as a radiation thermometer, and managed.

Then, in the step (S140), water as a cooling liquid, for example, is injected toward the whole of formed body 110 including heated region 111A formed in the step (S130), whereby the whole of heated region 111A is simultaneously cooled to a temperature of not more than an Mₛ point. Thus, heated region 111A transforms into martensite, and hardens. Through the aforementioned procedure, induction quenching is executed, and the quench hardening step is completed.

Then, a tempering step is carried out as a step (S150). In this step (S150), formed body 110 quench-hardened in the steps (S130) and (S140) is charged into a furnace, for example, heated to a temperature of not more than the A₁ point and retained for a prescribed time, whereby tempering is executed.

Then, a finishing step is carried out as a step (S160). In this step (S160), finishing such as polishing is executed on rolling contact surface 111, for example. Through the aforementioned process, the inner ring of the rolling bearing is completed, and production of the inner ring according to this embodiment is completed. Consequently, referring to Figs. 8 and 9, an inner ring 110, having an inner diameter d₃ of at least 1000 mm, in which a quench-hardened layer is homogeneously formed by induction quenching along rolling contact surface 111 over the entire circumference is completed.

According to this embodiment, coil 121 arranged to face part of the rolling contact surface of formed body 110 is relatively rotated along the circumferential direction in the step (S130), whereby heated region 111A is formed on formed body 110. Therefore, it is possible to employ coil 121 small with respect to the outer shape of formed body 110, and the production cost for a quenching apparatus can be suppressed also in a case of quench-hardening large-sized formed body 110. According to this embodiment, further, the whole of heated region 111A is simultaneously cooled to the temperature of not more than the Mₛ point. Therefore, it becomes possible to form an annular quench-hardened region homogeneous in the circumferential direction, and residual stress is inhibited from concentrating on a partial region. According to this embodiment, in addition, steel capable of implementing sufficiently high hardness by quench hardening and having a proper component composition capable of suppressing quench cracking while ensuring high quenchability is employed as the material. Consequently, the method for producing an inner ring according to this embodiment has become a method for producing a bearing ring capable of homogeneously forming a quench-hardened layer by induction quenching along a rolling contact surface over the entire circumference while suppressing the production cost for a quenching apparatus.

While the aforementioned step (S120) is not an essential step in the method for producing a bearing ring according to the present invention, the hardness of an unhardened region (region other than the quench-hardened layer) of the produced bearing ring can be adjusted by carrying out this. It is also possible to achieve the adjustment of the hardness of the unhardened region by executing quenching and tempering, in place of the step (S120). However, the steel having a relatively high carbon content and having the aforementioned component composition exhibiting high quenchability is employed as the material in this embodiment, and hence quench cracking easily takes place. Therefore, normalizing is preferably executed as the step (S120) for hardness adjustment of the unhardened region.

In the aforementioned step (S120), shot blasting may be executed while formed body 110 is cooled, by spraying hard particles onto formed body 110 along with gas. Thus, the shot blasting can be executed simultaneously with air-blast cooling at the time of the normalizing. Therefore, scales formed on the surface layer portion of formed body 110 due to heating in the normalizing are removed, and characteristic reduction of the bearing ring resulting from formation of the scales or reduction of thermal conductivity resulting from formation of the scales is suppressed. As the hard particles (projection material), metal particles made of steel or cast iron can be employed, for example.

While formed body 110 may rotate at least once in the aforementioned step (S130), the same preferably rotates a plurality of times, in order to implement more homogeneous quench hardening by suppressing dispersion in temperature in the circumferential direction. In other words, coil 121 as an induction heating member preferably relatively rotates at least twice along the circumferential direction of the rolling contact surface of formed body 110.

### (Fifth Embodiment)

A fifth embodiment which is a further embodiment of the present invention is now described. A method for producing an inner ring according to the fifth embodiment is basically carried out similarly to the case of the fourth embodiment, and attains similar effects. However, the method for producing an inner ring according to the fifth embodiment is different from the case of the fourth embodiment in arrangement of coils 121 in a step (S130).

In other words, referring to Fig. 10, a pair of coils 121 are arranged to hold a formed body 110 therebetween in the step (S130) in the fifth embodiment. Then, formed body 110 is rotated in a direction of arrow α, and a high-frequency current is supplied to coils 121 from a power source (not shown). Thus, a surface layer region of formed body 110 including a rolling contact surface 111 is induction-heated to a temperature of at least an A₁ point, and an annular heated region 111A along rolling contact surface 111 is formed.

Thus, a plurality of (in this embodiment two) coils 121 are arranged along the circumferential direction of formed body 110, whereby the method for producing an inner ring of a rolling bearing according to the fifth embodiment has become a method for producing a bearing ring capable of implementing homogeneous quench hardening by suppressing dispersion in temperature in the circumferential direction. In order to further suppress the dispersion in temperature in the circumferential direction, coils 121 are preferably arranged at regular intervals in the circumferential direction of formed body 110.

### (Sixth Embodiment)

A sixth embodiment which is a further embodiment of the present invention is now described. A method for producing an inner ring according to the sixth embodiment is basically carried out similarly to the cases of the fourth and fifth embodiments, and attains similar effects. However, the method for producing an inner ring according to the sixth embodiment is different from the cases of the fourth and fifth embodiments in arrangement of thermometers 122 in a step (S130).

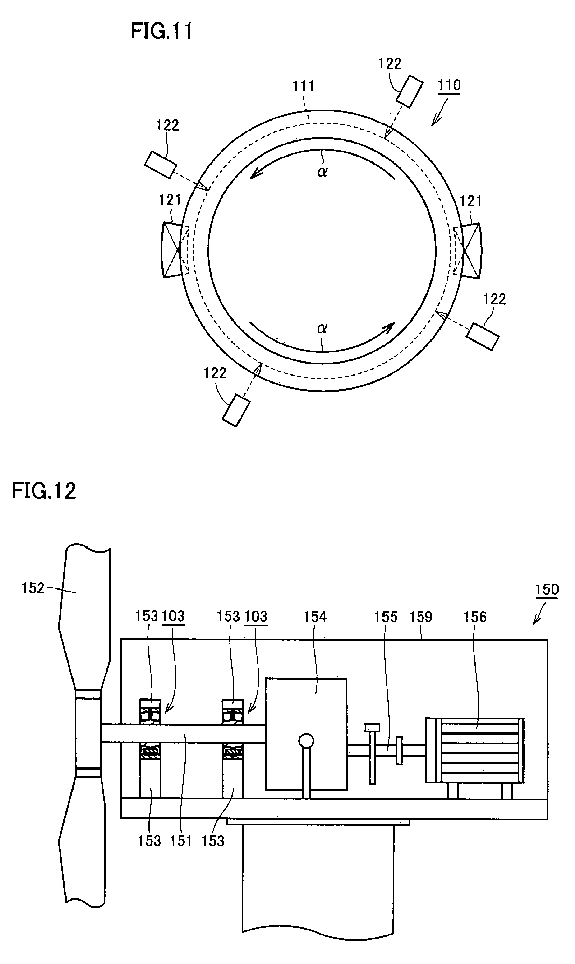

In other words, referring to Fig. 11, temperatures on a plurality of portions (four portions here) of a rolling contact surface 111 which is a heated region are measured in the step (S130) in the sixth embodiment. More specifically, plurality of thermometers 122 are arranged at regular intervals along the circumferential direction of rolling contact surface 111 of a formed body 110 in the step (S130) in the sixth embodiment.

Thus, the temperatures on the plurality of portions are simultaneously measured in the circumferential direction of rolling contact surface 111, whereby quench hardening can be executed by rapidly cooling formed body 110 after confirming that homogeneous heating is implemented in the circumferential direction of rolling contact surface 111. Consequently, more homogeneous quench hardening can be implemented in the circumferential direction of rolling contact surface 111 according to the method for producing an inner ring of a rolling bearing according to the sixth embodiment.

While the case of fixing coils 121 and rotating formed body 110 has been described in the aforementioned embodiment, coils 121 may be rotated in the circumferential direction of formed body 110 while fixing formed body 110, or coils 121 may be relatively rotated along the circumferential direction of formed body 110 by rotating both of coils 121 and formed body 110. However, wires or the like supplying a current to coils 121 are necessary for coils 121, and hence it is for the most part rational to fix coils 121 as described above.

While a case where an inner ring of a radial rolling bearing is produced as an example of a bearing ring has been described in the aforementioned embodiment, a bearing ring to which the present invention is applicable is not restricted to this, but may be an outer ring of a radial roller bearing or a bearing ring of a thrust bearing, for example. In a case of heating an outer ring of a radial roller bearing, for example, in the step (S120), coils 121 may be arranged to face a rolling contact surface formed on an inner peripheral side of a formed body. In a case of heating a bearing ring of a thrust rolling bearing, for example, in the step (S120), coils 121 may be arranged to face a rolling contact surface formed on an end surface side of a formed body.

While the length of coils 121 as induction heating members in the circumferential direction of formed body 110 can be so properly decided as to efficiently implement homogeneous heating, the same can be set to about 1/12 of the length of the region to be heated, i.e., a length of such a degree that a central angle with respect to the central axis of the formed body (bearing ring) becomes 30°, for example.

Further, specific conditions for the induction quenching in the present invention can be properly set in consideration of conditions such as the size and the thickness of and the material for the bearing ring (formed body), the capacity of the power source and the like. More specifically, in a case of induction-quenching a rolling contact surface 111 of a formed body having an outer shape d₁ of 2000 mm, an inner diameter d₂ of 1860 mm and a width t of 100 mm referring to Fig. 9, for example, the rotational speed of the formed body, the frequency of the power source and the total heat value by induction heating can be set to 30 rpm, 3 kHz and 250 kW respectively.

In order to suppress dispersion in temperature in the circumferential direction, a step of retaining the formed body in a state where the heating is stopped is preferably provided after completion of the induction heating and before the cooling to the temperature of not more than the Mₛ point. More specifically, dispersion in temperature in the circumferential direction on the surface of the heated region can be suppressed to about not more than 20°C under the aforementioned conditions of the shape of the formed body and the heating, by retaining the formed body in the state where the heating is stopped for three seconds after completion of the heating, for example.

### (Seventh Embodiment)

A seventh embodiment in which bearing rings according to the present invention are employed as bearing rings constituting bearings for a wind turbine generator (rolling bearings for a wind turbine generator) is now described.

Referring to Fig. 12, a wind turbine generator 150 includes a blade 152 which is a swirler, a main shaft 151 connected to blade 152 on one end to include a center shaft of blade 152 and a speed increaser 154 connected to another end of main shaft 151. Further, speed increaser 154 includes an output shaft 155, and output shaft 155 is connected to a generator 156. Main shaft 151 is supported by main shaft bearings 103 which are rolling bearings for a wind turbine generator, to be rotatable on an axis. A plurality of (in Fig. 12 two) main shaft bearings 103 are arranged in line in the axial direction of main shaft 151, and held by housings 153 respectively. Main shaft bearings 103, housings 153, speed increaser 154 and generator 156 are stored in a nacelle 159 which is a machinery room. Main shaft 151 protrudes from nacelle 159 on one end, and is connected to blade 152.

Operation of wind turbine generator 150 is now described. Referring to Fig. 12, when blade 152 rotates in the circumferential direction by receiving wind power, main shaft 151 connected to blade 152 rotates on the axis while being supported by main shaft bearings 103 with respect to housings 153. The rotation of main shaft 151 is transmitted to speed increaser 154 to be speeded up, and converted to rotation of output shaft 155 on an axis. The rotation of output shaft 155 is transmitted to generator 156, and electromotive force is so generated by electromagnetic induction that power generation is achieved.

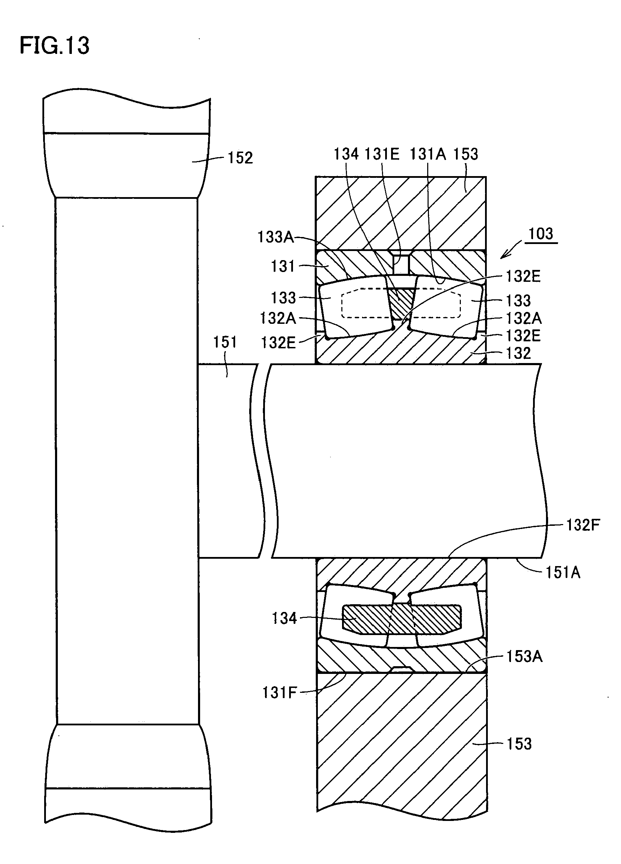

A support structure for main shaft 151 of wind turbine generator 150 is now described. Referring to Fig. 13, each main shaft bearing 103 as a rolling bearing for a wind turbine generator includes an annular outer ring 131 as a bearing ring of the rolling bearing for a wind turbine generator, an annular inner ring 132 as a bearing ring of the rolling bearing for a wind turbine generator arranged on the inner peripheral side of outer ring 131, and a plurality of rollers 133 arranged between outer ring 131 and inner ring 132 and held by an annular cage 134. An outer ring rolling contact surface 131A is formed on the inner peripheral surface of outer ring 131, and two inner ring rolling contact surfaces 132A are formed on the outer peripheral surface of inner ring 132. Outer ring 131 and inner ring 132 are so arranged that two inner ring rolling contact surfaces 132A are opposed to outer ring rolling contact surface 131A. Further, plurality of rollers 133 are in contact with outer ring rolling contact surface 131A and inner ring rolling contact surfaces 132A on roller contact surfaces 133A along the respective ones of two inner ring rolling contact surfaces 132A, and held by cage 134 and arranged at a prescribed pitch in the circumferential direction, to be rollably held on double rows (two rows) of annular raceways. A through-hole 131E passing through outer ring 131 in the radial direction is formed in outer ring 131. A lubricant can be supplied to a space between outer ring 131 and inner ring 132 through this through-hole 131E. Outer ring 131 and inner ring 132 of main shaft bearing 103 are mutually relatively rotatable, due to the aforementioned structure.

On the other hand, main shaft 151 connected to blade 152 passes through inner ring 132 of main shaft bearing 103, is in contact with an inner peripheral surface 132F of the inner ring on an outer peripheral surface 151A, and fixed to inner ring 132. Outer ring 131 of main shaft bearing 103 is fitted to come into contact with an inner wall 153A of a through-hole formed in housing 153 on an outer peripheral surface 131F, and fixed to housing 153. Main shaft 151 connected to blade 152 is rotatable on the axis with respect to outer ring 131 and housing 153 integrally with inner ring 132, due to the aforementioned structure.

Further, flange portions 132E protruding toward outer ring 131 are formed on both ends of inner ring rolling contact surfaces 132A in the width direction. Thus, a load in the axial direction (axial direction) of main shaft 151 caused by blade 152 receiving wind is supported. Outer ring rolling contact surface 131A has a spherical surface shape. Therefore, outer ring 131 and inner ring 132 can mutually form an angle while centering on the center of this spherical surface on a section perpendicular to the rolling direction of rollers 133. In other words, main shaft bearing 103 is a double-row self-aligning roller bearing. Consequently, even in a case where main shaft 151 is deflected due to blade 152 receiving wind, housing 153 can stably rotatably hold main shaft 151 through main shaft bearing 103.

Outer ring 131 and inner ring 132 as bearing rings of a rolling bearing for a wind turbine generator according to the seventh embodiment are produced by the method for producing a ring-shaped member according to any of the aforementioned fourth to sixth embodiments, for example. Outer ring 131 and inner ring 132 are bearing rings of a rolling bearing for a wind turbine generator having inner diameters of at least 1000 mm. In outer ring 131 and inner ring 132, quench-hardened layers are homogeneously formed by induction quenching along outer ring rolling contact surface 131A and inner ring rolling contact surfaces 132A over the entire circumferences. In other words, outer ring 131 and inner ring 132 have inner diameters of at least 1000 mm, and have quench-hardened layers, formed by induction quenching, of annular shapes along the circumferential direction having uniform depths, and the surfaces of the quench-hardened layers form outer ring rolling contact surface 131A and inner ring rolling contact surfaces 132A respectively. Consequently, aforementioned outer ring 131 and inner ring 132 have become large-sized bearing rings in which quench-hardened regions are homogeneously formed by induction quenching along rolling contact surfaces over the entire circumferences while the cost for heat treatment is suppressed, and have become bearing rings constituting a bearing for a wind turbine generator usable also in a severe environment.

The method for producing a bearing ring according to the present invention is suitable for production of a bearing ring of a large-sized rolling bearing. While the bearing rings for a wind turbine generator have been described as examples of the large-sized rolling bearing in the aforementioned seventh embodiment, application to another large-sized rolling bearing is also possible. More specifically, the method for producing a bearing ring according to the present invention can be suitably applied to production of a bearing ring of a rolling bearing for a CT scanner supporting a rotatable mounting on which an X-ray irradiation portion of a CT scanner is set to be rotatable with respect to a fixed mounting arranged to be opposed to the rotatable mounting, for example. Further, the method for producing a bearing ring according to the present invention is applicable to a bearing ring of an arbitrary rolling bearing such as a deep groove ball bearing, an angular contact ball bearing, a cylindrical roller bearing, a tapered roller bearing, a self-aligning roller bearing or a thrust ball bearing, for example.

### (Eighth Embodiment)

An eighth embodiment of the present invention is now described. While a method for producing an inner ring is mainly described as a method for producing a bearing ring, an outer ring can also be similarly produced.

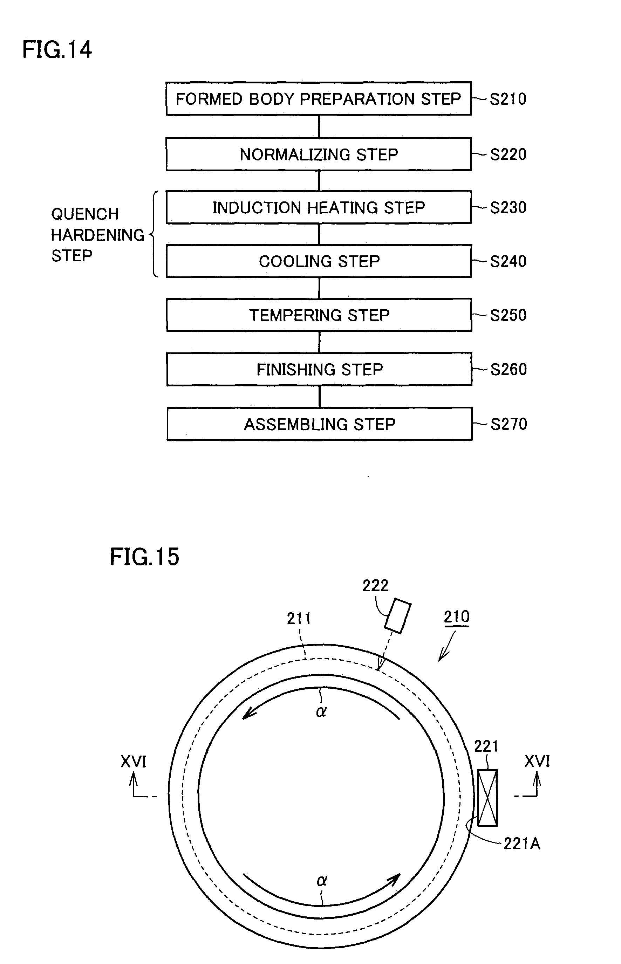

Referring to Fig. 14, a formed body preparation step is first carried out as a step (S210) in the method for producing an inner ring according to this embodiment. In this step (S210), a steep stock having an arbitrary component composition suitable for induction quenching, such as a steel stock containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity is prepared, and working such as forging or turning is executed, whereby a formed body having a shape responsive to a desired shape of an inner ring is prepared. More specifically, a formed body responsive to the shape of an inner ring having an inner diameter of at least 1000 mm is prepared. If the inner ring to be produced is particularly large and higher quenchability is required to steel, a steel stock to which at least 0.35 mass % and not more than 0.75 mass % of nickel is added in addition to the aforementioned alloy components may be employed. As steel satisfying the aforementioned component composition, JIS SUP13, SCM 445, SAE standard 8660H or the like can be listed, for example.

Then, a normalizing step is carried out as a step (S220). In this step (S220), the formed body prepared in the step (S210) is heated to a temperature of at least a transformation A₁ point and thereafter cooled to a temperature of less than the transformation A₁ point, whereby normalizing is executed. At this time, a cooling rate in the cooling in the normalizing may simply be a cooling rate at which the steel constituting the formed body does not transform into martensite, i.e., a cooling rate of less than a critical cooling rate. Hardness of the formed body after the normalizing becomes high when this cooling rate increases, and becomes low when the cooling rate decreases. Therefore, desired hardness can be supplied to the formed body by adjusting the cooling rate.

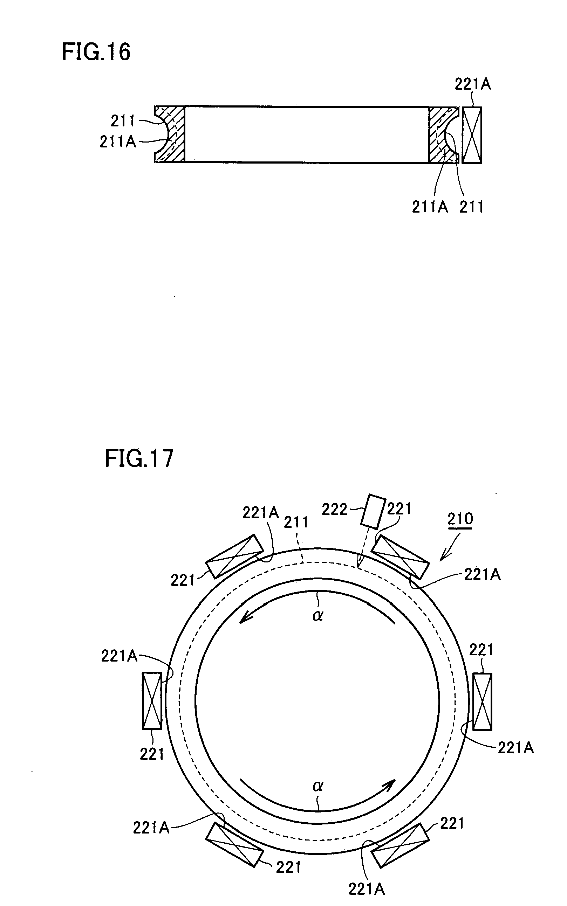

Then, referring to Fig. 14, a quench hardening step is carried out. This quench hardening step includes an induction heating step carried out as a step (S230) and a cooling step carried out as a step (S240). In the step (S230), referring to Figs. 15 and 16, a coil 221 as an induction heating coil is arranged to face part of a rolling contact surface 211 (annular region) which is a surface where a rolling element must roll in a formed body 210. An induction-heated region 221A which is a region facing rolling contact surface 211 and contributing to heating of rolling contact surface 211 in coil 221 is included in the same plane, as shown in Figs. 15 and 16. In other words, a region opposed to rolling contact surface 211 in coil 221 has a plane shape included in the same plane.

Then, formed body 210 is rotated on a central axis, more specifically in a direction of arrow α, while a high-frequency current is supplied to coil 221 from a power source (not shown). Thus, a surface layer region of formed body 210 including rolling contact surface 211 is induction-heated to a temperature of at least the A₁ point, and an annular heated region 211A along rolling contact surface 211 is formed. At this time, the temperature on the surface of rolling contact surface 211 is measured with a thermometer 222 such as a radiation thermometer, and managed.

Then, in the step (S240), water as a cooling liquid, for example, is injected toward the whole of formed body 210 including heated region 211A formed in the step (S230), whereby the whole of heated region 211A is simultaneously cooled to a temperature of not more than an Mₛ point. Thus, heated region 211A transforms into martensite, and the region including rolling contact surface 211 hardens. Through the aforementioned procedure, induction quenching is executed, and the quench hardening step is completed.

Then, a tempering step is carried out as a step (S250). In this step (S250), formed body 210 quench-hardened in the steps (S230) and (S240) is charged into a furnace, for example, heated to a temperature of not more than the A₁ point and retained for a prescribed time, whereby tempering is executed.

Then, a finishing step is carried out as a step (S260). In this step (S260), finishing such as polishing is executed on rolling contact surface 211, for example. Through the aforementioned process, the inner ring of the rolling bearing is completed, and production of the inner ring according to this embodiment is completed. Consequently, referring to Figs. 15 and 16, an inner ring 210, having an inner diameter of at least 1000 mm, in which a quench-hardened layer is homogeneously formed by induction quenching along rolling contact surface 211 over the entire circumference is completed.

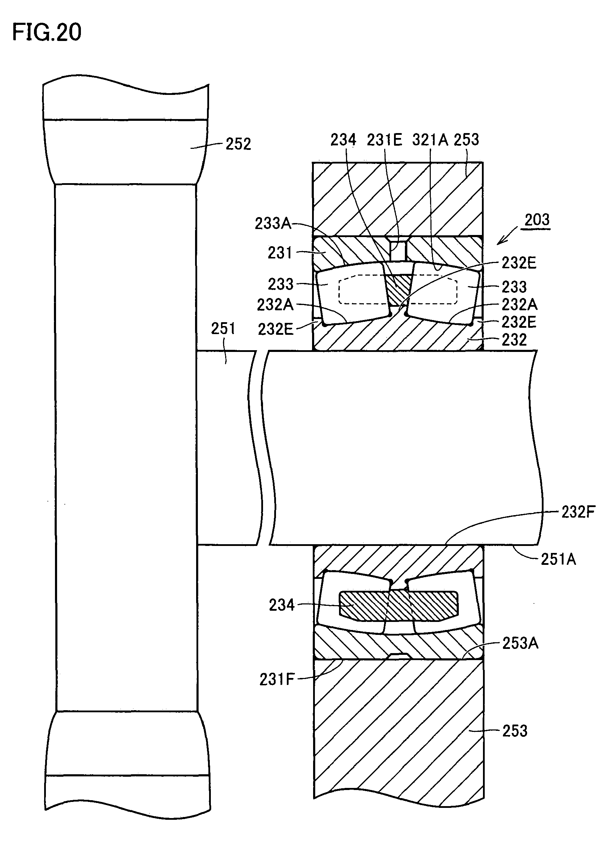

Further, an assembling step is carried out as a step (S270). In this step (S270), inner ring 210 prepared as described above and an outer ring prepared similarly to aforementioned inner ring 210 are combined with separately prepared rolling elements, cages and the like, whereby a main shaft bearing 203 for a wind turbine generator shown in Fig. 20 described later is assembled, for example. Through the aforementioned procedure, the method for producing a rolling bearing according to this embodiment is completed.

According to this embodiment, coil 221 arranged to face part of the rolling contact surface of formed body 210 is relatively rotated along the circumferential direction in the step (S230), whereby heated region 211A is formed on formed body 210. Therefore, it is possible to employ coil 221 small with respect to the outer shape of formed body 210, and the production cost for a quenching apparatus can be suppressed also in a case of quench-hardening large-sized formed body 210. According to this embodiment, further, the whole of heated region 211A is simultaneously cooled to a temperature of not more than the Mₛ point. Therefore, it becomes possible to form an annular quench-hardened region homogeneous in the circumferential direction, and residual stress is inhibited from concentrating on a partial region.

According to this embodiment, in addition, coil 221 having such a shape that the induction-heated region is included in the same plane is employed in the step (S230). Also in a case of executing quenching of formed bodies (inner rings) 210 having different sizes or shapes, therefore, no coils responsive to the shapes of the respective formed bodies (inner rings) are required, but the production cost for a quenching apparatus can be reduced. According to the method for producing an inner ring according to this embodiment, as hereinabove described, a quench-hardened layer can be homogeneously formed by induction quenching along a rolling contact surface over the entire circumference while suppressing the production cost for a quenching apparatus.

According to the method for producing a rolling bearing according to this embodiment, further, a rolling bearing including a bearing ring in which a quench-hardened layer is homogeneously formed by induction quenching along a rolling contact surface over the entire circumference can be produced at a low cost.

While the normalizing step carried out as the aforementioned step (S220) is not an essential step in the method for producing a bearing ring according to the present invention, the hardness of a formed body made of steel such as JIS SUP13, SCM445, SAE standard 8660H or the like can be adjusted while suppressing occurrence of quench cracking by carrying out this.

In this step (S220), shot blasting may be executed while formed body 210 is cooled, by spraying hard particles onto formed body 210 along with gas. Thus, the shot blasting can be executed simultaneously with air-blast cooling at the time of the noimalizing, whereby scales formed on the surface layer portion of formed body 210 are removed, and characteristic reduction of inner ring 210 resulting from formation of the scales or reduction of thermal conductivity resulting from formation of the scales is suppressed. As the hard particles (projection material), metal particles made of steel or cast iron can be employed, for example.

While formed body 210 may rotate at least once in the aforementioned step (S230), the same preferably rotates a plurality of times, in order to implement more homogeneous quench hardening by suppressing dispersion in temperature in the circumferential direction. In other words, coil 221 as an induction heating coil preferably relatively rotates at least twice along the circumferential direction of rolling contact surface 211 of formed body 210.

### (Ninth Embodiment)

A ninth embodiment which is a further embodiment of the present invention is now described. A method for producing an inner ring and a rolling bearing according to the ninth embodiment is basically carried out similarly to the case of the eighth embodiment, and attains similar effects. However, the method for producing an inner ring and a rolling bearing according to the ninth embodiment is different from the case of the eighth embodiment in arrangement of coils 221 in a step (S230).

In other words, referring to Fig. 17, a plurality of (here six) coils 221 are arranged along a rolling contact surface 211 formed on the outer peripheral surface of a formed body 210 in the step (S230) in the ninth embodiment. Similarly to the case of the eighth embodiment, formed body 210 is rotated along a direction of arrow α, and a high-frequency current is supplied to coils 221 from a power source (not shown). Thus, a surface layer portion of formed body 210 including rolling contact surface 211 is induction-heated to a temperature of at least an A₁ point, and an annular heated region 211A along rolling contact surface 211 is formed.

Thus, plurality of coils 221 are arranged along the circumferential direction of formed body 210, whereby a method for producing an inner ring of a rolling bearing according to the ninth embodiment has become a method for producing a bearing ring capable of implementing homogeneous quench hardening by suppressing dispersion in temperature in the circumferential direction. In order to further suppress dispersion in temperature in the circumferential direction, coils 221 are preferably arranged at regular intervals in the circumferential direction of formed body 210.

### (Tenth Embodiment)

A tenth embodiment which is a further embodiment of the present invention is now described. A method for producing an inner ring according to the tenth embodiment is basically carried out similarly to the cases of the eighth and ninth embodiments, and attains similar effects. However, the method for producing an inner ring according to the tenth embodiment is different from the cases of the eighth and ninth embodiments in arrangement of thermometers 222 in a step (S230).

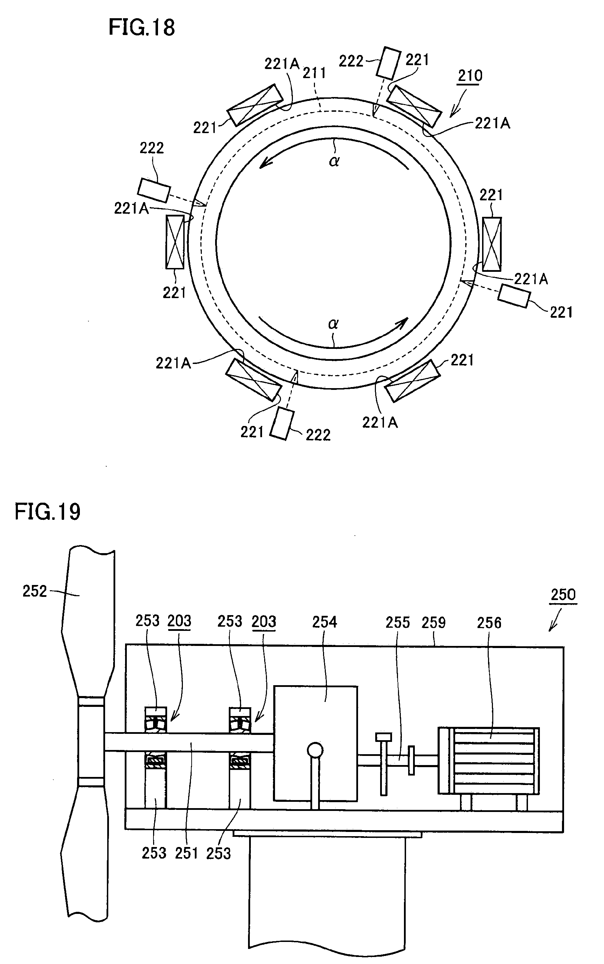

In other words, referring to Fig. 18, temperatures on a plurality of portions (four portions here) of a rolling contact surface 211 which is a heated region are measured in the step (S230) in the tenth embodiment. More specifically, a plurality of thermometers 222 are arranged at regular intervals along the circumferential direction of rolling contact surface 211 of a formed body 210 in the step (S230) in the tenth embodiment.

Thus, the temperatures of the plurality of portions are simultaneously measured in the circumferential direction of rolling contact surface 211, whereby quench hardening can be executed by rapidly cooling formed body 210 after confirming that homogeneous heating is implemented in the circumferential direction of rolling contact surface 211. Consequently, more homogeneous quench hardening can be implemented in the circumferential direction of rolling contact surface 211 according to the method for producing an inner ring of a rolling bearing according to the tenth embodiment.

While the case of fixing coils 221 and rotating formed body 210 has been described in the aforementioned embodiment, coils 221 may be rotated in the circumferential direction of formed body 110 while fixing formed body 210, or coils 221 may be relatively rotated along the circumferential direction of formed body 210 by rotating both of coils 221 and formed body 210. However, wires or the like supplying a current to coils 221 are necessary for coils 221, and hence it is for the most part rational to fix coils 221 as described above.

While a case where an inner ring of a radial rolling bearing is produced as an example of a bearing ring has been described in the aforementioned embodiment, a bearing ring to which the present invention is applicable is not restricted to this, but may be an outer ring of a radial roller bearing or a bearing ring of a thrust bearing, for example. In a case of heating an outer ring of a radial roller bearing, for example, in the step (S230), coils 221 may be arranged to face a rolling contact surface formed on an inner peripheral side of a formed body. In a case of heating a bearing ring of a thrust rolling bearing, for example, in the step (S230), coils 221 may be arranged to face a rolling contact surface formed on an end surface side of a formed body.

In order to suppress dispersion in temperature in the circumferential direction, a step of retaining the formed body in a state where the heating is stopped is preferably provided after completion of the induction heating and before the cooling to the temperature of not more than the Mₛ point.

### (Eleventh Embodiment)

An eleventh embodiment in which rolling bearings produced according to the method for producing a rolling bearing according to the present invention are employed as bearings for a wind turbine generator (rolling bearings for a wind turbine generator) is now described.

Referring to Fig. 19, a wind turbine generator 250 includes a blade 252 which is a swirler, a main a main shaft 251 connected to blade 252 on one end to include a center shaft of blade 252 and a speed increaser 254 connected to another end of main shaft 251. Further, speed increaser 254 includes an output shaft 255, and output shaft 255 is connected to a generator 256. Main shaft 251 is supported by main shaft bearings 203 which are rolling bearings for a wind turbine generator, to be rotatable on an axis. A plurality of (in Fig. 19 two) main shaft bearings 203 are arranged in line in the axial direction of main shaft 51, and held by housings 253 respectively. Main shaft bearings 203, housings 253, speed increaser 254 and generator 256 are stored in a nacelle 259 which is a machinery room. Main shaft 251 protrudes from nacelle 259 on one end, and is connected to blade 252.

Operation of wind turbine generator 250 is now described. Referring to Fig. 19, when blade 252 rotates in the circumferential direction by receiving wind power, main shaft 251 connected to blade 252 rotates on the axis while being supported by main shaft bearings 203 with respect to housings 253. The rotation of main shaft 251 is transmitted to speed increaser 254 to be speeded up, and converted to rotation of output shaft 255 on an axis. The rotation of output shaft 255 is transmitted to generator 256, and electromotive force is so generated by electromagnetic induction that power generation is achieved.

A support structure for main shaft 251 of wind turbine generator 250 is now described. Referring to Fig. 20, each main shaft bearing 203 as a rolling bearing for a wind turbine generator includes an annular outer ring 231 as a bearing ring of the rolling bearing for a wind turbine generator, an annular inner ring 232 as a bearing ring of the rolling bearing for a wind turbine generator arranged on the inner peripheral side of outer ring 231, and a plurality of rollers 233 arranged between outer ring 231 and inner ring 232 and held by an annular cage 234. An outer ring rolling contact surface 231A is formed on the inner peripheral surface of outer ring 231, and inner ring rolling contact surfaces 232A are formed on the outer peripheral surface of inner ring 232. Outer ring 231 and inner ring 232 are so arranged that inner ring rolling contact surfaces 232A are opposed to outer ring rolling contact surface 231A. Further, plurality of rollers 233 are in contact with outer ring rolling contact surface 231A and inner ring rolling contact surfaces 232A on roller contact surfaces 233A along the respective ones of two inner ring rolling contact surfaces 232A, and held by cage 234 and arranged at a prescribed pitch in the circumferential direction, to be rollably held on double rows (two rows) of annular raceways. A through-hole 231E passing through outer ring 231 in the radial direction is formed in outer ring 231. A lubricant can be supplied to a space between outer ring 231 and inner ring 232 through this through-hole 231E. Outer ring 231 and inner ring 232 of main shaft bearing 203 are mutually relatively rotatable, due to the aforementioned structure.

On the other hand, main shaft 251 connected to blade 252 passes through inner ring 232 of main shaft bearing 203, is in contact with a fitting surface 232F which is an inner peripheral surface of the inner ring on an outer peripheral surface 251A, and fitted into and fixed to inner ring 232. Outer ring 231 of main shaft bearing 203 is fitted to come into contact with an inner wall 253A of a through-hole formed in housing 253 on a fitting surface 231F which is an outer peripheral surface, and fixed to housing 253. Main shaft 251 connected to blade 252 is rotatable on the axis with respect to outer ring 231 and housing 253 integrally with inner ring 232, due to the aforementioned structure.

Further, flange portions 232E protruding toward outer ring 231 are formed on both ends of inner ring rolling contact surfaces 232A in the width direction. Thus, a load in the axial direction (axial direction) of main shaft 251 caused by blade 252 receiving wind is supported. Outer ring rolling contact surface 231A has a spherical surface shape. Therefore, outer ring 231 and inner ring 232 can mutually form an angle while centering on the center of this spherical surface on a section perpendicular to the rolling direction of rollers 233. In other words, main shaft bearing 203 is a double-row self-aligning roller bearing. Consequently, even in a case where main shaft 251 is deflected due to blade 252 receiving wind, housing 253 can stably rotatably hold main shaft 251 through main shaft bearing 203.

Outer ring 231 and inner ring 232 as bearing rings of a rolling bearing for a wind turbine generator according to the eleventh embodiment are produced by the method for producing a bearing ring according to any of the aforementioned eighth to tenth embodiments, for example. Outer ring 231 and inner ring 232 are bearing rings of a rolling bearing for a wind turbine generator having inner diameters of at least 1000 mm. In outer ring 231 and inner ring 232, quench-hardened layers are homogeneously formed by induction quenching along outer ring rolling contact surface 231A and inner ring rolling contact surfaces 232A over the entire circumferences. In other words, outer ring 231 and inner ring 232 have inner diameters of at least 1000 mm, and have quench-hardened layers, formed by induction quenching, of annular shapes along the circumferential direction having uniform depths, and the surfaces of the quench-hardened layers form outer ring rolling contact surface 231A and inner ring rolling contact surfaces 232A respectively. Consequently, aforementioned outer ring 231 and inner ring 232 have become large-sized bearing rings in which quench-hardened regions are homogeneously formed along rolling contact surfaces over the entire circumferences while the cost for heat treatment is suppressed, and have become bearing rings constituting a bearing for a wind turbine generator usable also in a severe environment.

The methods for producing a bearing ring and a rolling bearing according to the present invention are suitable for production of a bearing ring of a large-sized rolling bearing and a large-sized rolling bearing. While the bearing ring for a wind turbine generator has been described as an example of the large-sized rolling bearing in the aforementioned eleventh embodiment, application to another large-sized rolling bearing is also possible. More specifically, the methods for producing a bearing ring according to the present invention can be suitably applied to production of a bearing ring of a rolling bearing for a CT scanner supporting a rotatable mounting on which an X-ray irradiation portion of a CT scanner is set to be rotatable with respect to a fixed mounting arranged to be opposed to the rotatable mounting and a rolling bearing for a CT scanner, for example. Further, the methods for producing a bearing ring and a rolling bearing according to the present invention are applicable to a bearing ring of an arbitrary rolling bearing such as a deep groove ball bearing, an angular contact ball bearing, a cylindrical roller bearing, a tapered roller bearing, a self-aligning roller bearing or a thrust ball bearing and a rolling bearing, for example.

### (Twelfth Embodiment)

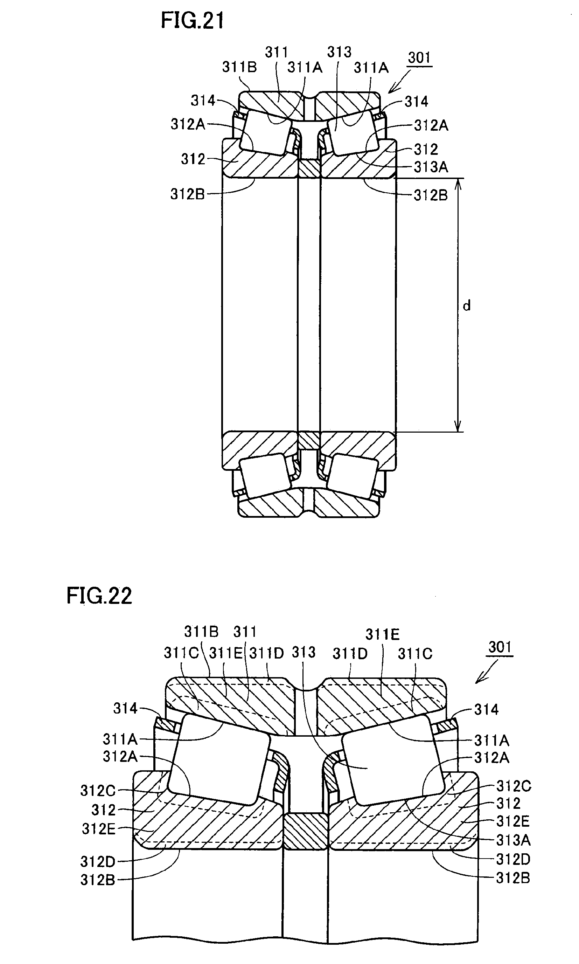

A twelfth embodiment is now described. Referring to Fig. 21, a double row tapered roller bearing 301 which is a rolling bearing according to the twelfth embodiment includes an annular outer ring 311, two annular inner rings 312 arranged inside outer ring 311, and a plurality of tapered rollers 313 arranged between outer ring 311 and inner rings 312. Two rows of outer ring rolling contact surfaces 311A are formed on the inner peripheral surface of outer ring 311, while one row of inner ring rolling contact surface 312A is formed on the outer peripheral surface of each of two inner rings 312. One outer ring 311 and two inner rings 312 are so arranged that inner ring rolling contact surface 312A of one inner ring 312 is opposed to one outer ring rolling contact surface 311A and inner ring rolling contact surface 312A of other inner ring 312 is opposed to other outer ring rolling contact surface 311A. Further, plurality of tapered roller bearings 313 are in contact with outer ring rolling contact surfaces 311A and inner ring rolling contact surfaces 312A along the respective ones of outer ring rolling contact surfaces 311A, and held by cages 314 and arranged at a prescribed pitch in the circumferential direction, to be rollably held on two rows of annular raceways. Outer ring 311 and inner rings 312 of double row tapered roller bearing 301 are mutually relatively rotatable, due to the aforementioned structure.

Referring to Figs. 21 and 22, further, outer ring 311 and inner rings 312 have inner diameters of at least 1000 mm. Outer ring 311 and inner rings 312 include rolling contact surface quenched layers 311C and 312C formed along rolling contact surfaces 311A and 312A over the entire circumferences to include rolling contact surfaces 311A and 312A which are surfaces where rollers 313 which are rolling elements must roll, fitting surface quenched layers 311D and 312D formed along fitting surfaces 311B and 312B to include fitting surfaces 311B and 312B fitting with other members such as housings or shafts, and unhardened regions 311E and 312E formed between rolling contact surface quenched layers 311C and 312C and fitting surface quenched layers 311D and 312D. The thicknesses of fitting surface quenched layers 311D and 312D are smaller than the thicknesses of rolling contact surface quenched layers 311C and 312C.

In outer ring 311 and inner rings 312 according to this embodiment, rolling contact surface quenched layers 311C and 312C are formed along rolling contact surfaces 311A and 312A over the entire circumferences to include rolling contact surfaces 311A and 312A, whereby sufficient hardness is supplied to rolling contact surfaces 311A and 312A, and sufficient durability is ensured against rolling fatigue following rolling of rollers 313. In outer ring 311 and inner rings 312, further, fitting surface quenched layers 311D and 312D are formed along fitting surfaces 311B and 312B to include fitting surfaces 311B and 312B. Consequently, sufficient hardness is supplied to fitting surfaces 311B and 312B and sufficient interference can be ensured between outer ring 311 and inner rings 312 and the members such as housings or shafts, whereby damage of outer ring 311 and inner rings 312 resulting from creeping or the like, for example, can be suppressed.

In outer ring 311 and inner rings 312, in addition, unhardened regions 311E and 312E are formed between rolling contact surface quenched layers 311C and 312C and fitting surface quenched layers 311D and 312D while the thicknesses of fitting surface quenched layers 311D and 312D are smaller than the thicknesses of rolling contact surface quenched layers 311C and 312C. Thus, durability of outer ring 311 and inner rings 312 against rolling fatigue is further improved. Thus, outer ring 311 and inner rings 312 according to this embodiment have become bearing rings of a large-sized rolling bearing in which rolling contact surface quenched layers 311C and 312C are formed along rolling contact surfaces 311A and 312A to be improved in durability. Further, double row tapered roller bearing 301 including aforementioned outer ring 311 and inner rings 312 has become a large-sized roller bearing excellent in durability.

Aforementioned rolling contact surface quenched layers 311C and 312C and fitting surface quenched layers 311D and 312D can be formed by induction quenching, as described later. The absolute value of the difference between the maximum value and the minimum value of residual stress in the circumferential direction of rolling contact surfaces 311A and 312A is preferably not more than 20 % of the absolute value of an average value. Thus, occurrence of strain or quench cracking can be sufficiently suppressed. Such a state of residual stress can also be achieved by employing a method for producing a bearing ring according to this embodiment described later.

Aforementioned outer ring 311 and inner rings 312 are preferably constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity. The same so consist of steel having such a component composition that sufficiently high hardness can be implemented by quench hardening, and quench cracking can be suppressed while ensuring high quenchability. When outer ring 311 and inner rings 312 are particularly large and higher quenchability is required to the steel which is the material, at least 0.35 mass % and not more than 0.75 mass % of nickel may be added in addition to the aforementioned alloy components. As steel satisfying the aforementioned component composition, JIS SUP13, SCM 445, SAE standard 8660H or the like can be listed, for example.

An example of a method for producing aforementioned outer ring 311 and inner rings 312 as well as double row tapered roller bearing 301 is now described. While a method for producing each inner ring 312 among outer ring 311 and inner rings 312 is mainly described, outer ring 311 can also be similarly produced.

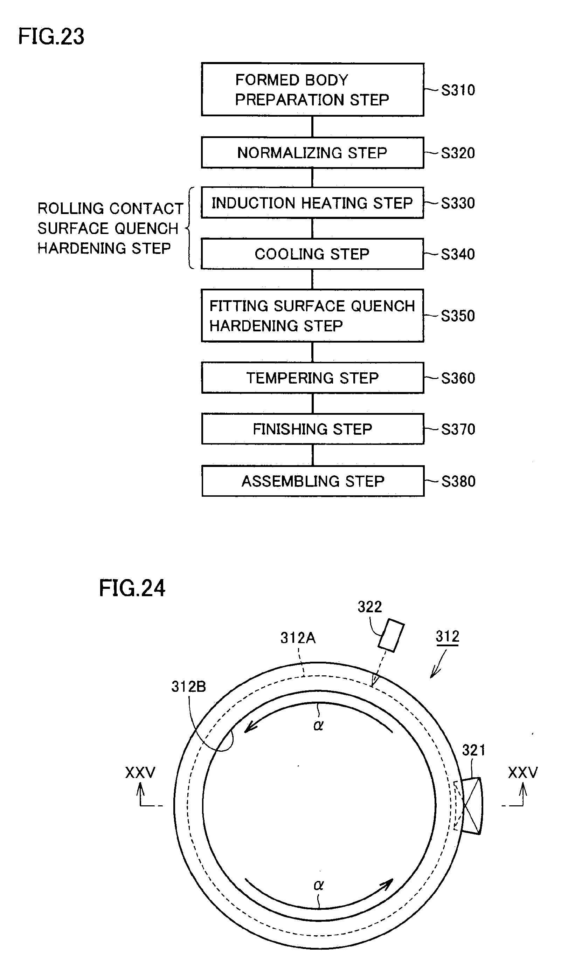

Referring to Fig. 23, a formed body preparation step is first carried out as a step (5310) in the method for producing an inner ring in a method for producing a rolling bearing according to this embodiment. In this step (S310), a steel stock of JIS SUP13, SCM 445, SAE standard 8660H or the like, for example, is prepared and working such as forging or turning is executed, whereby a formed body having a shape responsive to a desired shape of an inner ring is prepared. More specifically, a formed body responsive to the shape of an inner ring having an inner diameter of at least 1000 mm is prepared.

Then, a normalizing step is carried out as a step (S320). In this step (S320), the formed body prepared in the step (S310) is heated to a temperature of at least a transformation A₁ point and thereafter cooled to a temperature of less than the transformation A₁ point, whereby normalizing is executed. At this time, a cooling rate in the cooling in the normalizing may simply be a cooling rate at which the steel constituting the formed body does not transform into martensite, i.e., a cooling rate of less than a critical cooling rate. Hardness of the formed body after the normalizing becomes high when this cooling rate increases, and becomes low when the cooling rate decreases. Therefore, desired hardness can be supplied to the formed body by adjusting the cooling rate. This hardness corresponds to the hardness of unhardened regions 213E of inner rings 312.

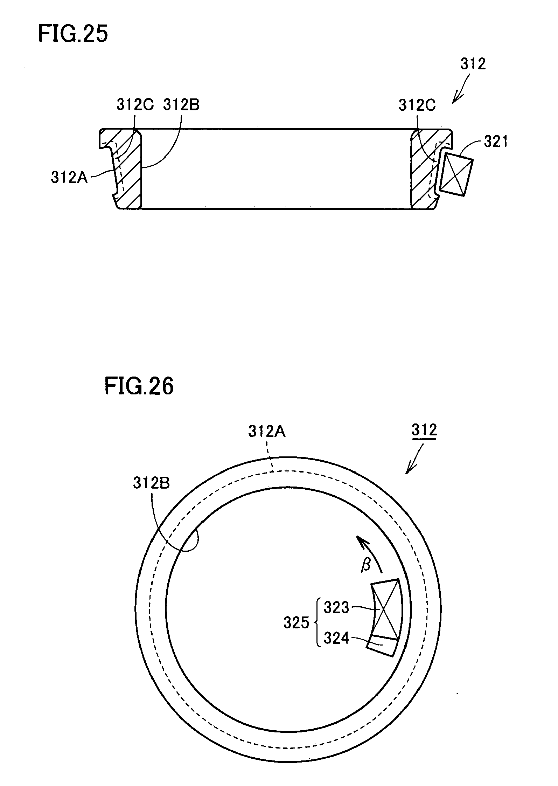

Then, referring to Fig. 21, a rolling contact surface quench hardening step is carried out. This rolling contact surface quench hardening step includes an induction heating step carried out as a step (S330) and a cooling step carried out as a step (S340). In the step (S330), referring to Figs. 24 and 25, a coil 321 as an induction heating member is arranged to face part of rolling contact surface 312A which is the surface where the rolling elements (rollers) must roll in formed body 312. Then, formed body 312 is rotated on a central axis, more specifically in the direction of arrow α, while a high-frequency current is supplied to coil 321 from a power source (not shown). Thus, a surface layer region of formed body 312 including rolling contact surface 312A is induction-heated to a temperature of at least the A₁ point, and annular heated region 312C along rolling contact surface 312A is formed. At this time, the temperature of the surface of rolling contact surface 312A is measured with a thermometer 322 such as a radiation thermometer, and managed.

Then, in the step (S340), water as a cooling liquid, for example, is injected toward the whole of formed body 312 including heated region 312C formed in the step (S330), whereby the whole of heated region 312C is simultaneously cooled to a temperature of not more than an Mₛ point. Thus, heated region 312C transforms into martensite, and hardens to become rolling surface quenched layer 312C. Through the aforementioned procedure, induction quenching is executed, and the rolling contact surface quench-hardening step is completed. The process of simultaneously cooling the whole of the region to a temperature of not more than the Mₛ point in the state of heating the region including rolling contact surface 312A to a temperature of at least the A₁ point over the entire circumference is employed as described above, whereby residual stress can be inhibited from concentrating on a partial region by reducing dispersion in residual stress in a direction along the circumferential direction of rolling contact surface 312A.

Then, a fitting surface quench hardening step is carried out as a step (S350). In this step (S350), a region of formed body 312 including fitting surface 312B is quench-hardened. More specifically, referring to Fig. 26, a transfer quenching apparatus 325 including a coil 323 which is an induction heating member and a cooling liquid injection portion 324 as a cooling member arranged adjacently to coil 323 is first arranged to face part of fitting surface 312B. Then, transfer quenching apparatus 325 moves along fitting surface 312B in the circumferential direction (direction of arrow β). At this time, a high-frequency current is supplied to coil 323 from a power source (not shown). Thus, a region of fitting surface 312B of formed body 312 opposed to coil 323 is induction-heated to a temperature of at least the A₁ point. On the other hand, a cooling liquid is injected from cooling liquid injection portion 324 toward fitting surface 312B of formed body 312. Consequently, the region of fitting surface 312B induction-heated to the temperature of at least the A₁ point with coil 323 is cooled to a temperature of not more than the Mₛ point by the cooling liquid injected from cooling liquid injection portion 324, and quench-hardened. Such quench hardening is successively executed following movement of transfer quenching apparatus 325, whereby fitting surface quenched layer 312D shown in Fig. 22 is formed.

In the step (S350), the aforementioned transfer quenching through which fitting surface 312B is cooled immediately after being heated is employed, whereby remarkable lowering of the hardness of rolling contact surface quenched layer 312C formed in the previous steps (S330) and (S340) following heating with coil 323 is avoided. In the step (S350), further, fitting surface quenched layer 312D is so formed that the thickness thereof is reduced as compared with rolling contact surface quenched layer 312C. The thicknesses of the quenched layers, i.e., the thicknesses of the regions heated by induction heating can be adjusted by controlling the frequency of the current supplied to the coil, the output of the power source and the like. A region having been not quench-hardened in the steps (S330) to (S350) becomes unhardened region 312E.

Then, a tempering step is carried out as a step (S360). In this step, formed body 312 partially quench-hardened in the steps (S330) to (S350) is charged into a furnace, for example, heated to a temperature of not more than the A₁ point and retained for a prescribed time, whereby tempering is executed.

Then, a finishing step is carried out as a step (S370). In this step (S370), finishing such as polishing is executed on rolling contact surface 312A, for example. Through the aforementioned process, inner ring 312 is completed, and production of the inner ring according to this embodiment is completed. Consequently, referring to Figs. 21 and 22, each inner ring 312, having an inner diameter of at least 1000 mm, in which rolling contact surface quenched layer 312C is homogeneously formed by induction quenching along rolling contact surface 312A over the entire circumference is completed.

Further, an assembling step is carried out as a step (S380). In this step (S380), inner ring 312 prepared as described above and outer ring 311 prepared similarly to aforementioned inner ring 312 are combined with separately prepared rollers 313, cages 314 and the like, whereby double row tapered roller bearing 301 is assembled. Through the aforementioned procedure, the method for producing a rolling bearing according to this embodiment is completed.

While the aforementioned step (S320) is not an essential step in the method for producing a bearing ring according to the present invention, the hardness of an unhardened region (region other than the quench-hardened layer) of the produced bearing ring can be adjusted by cariying out this. It is also possible to achieve the adjustment of the hardness of the unhardened region by executing quenching and tempering, in place of the step (S320). When steel such as JIS SUP13, SCM 445, SAE standard 8660H or the like having a relatively high carbon content and high quenchability is employed as the material as described, above, however, quench cracking easily takes place. Therefore, normalizing is preferably executed as the step (S320) for hardness adjustment of the unhardened region.

Further, while formed body 312 may rotate at least once in the aforementioned step (S330), the same preferably rotates a plurality of times, in order to implement more homogeneous quench hardening by suppressing dispersion in temperature in the circumferential direction. In other words, coil 321 as an induction heating member preferably relatively rotates at least twice along the circumferential direction of rolling contact surface 312A of formed body 312.

In the step (S330), a plurality of coils 321 are preferably arranged along the circumferential direction of rolling contact surface 312A. Thus, more homogeneous quench hardening can be rendered implementable by suppressing dispersion in temperature in the circumferential direction. At this time, plurality of coils 312 are preferably arranged at regular intervals in the circumferential direction of rolling contact surface 312A.

In the step (S330), further, temperatures on a plurality of portions of rolling contact surface 312A which is a heated region are preferably measured. Thus, more homogeneous quench hardening can be rendered implementable in the circumferential direction.

While the case of fixing coil 321 and rotating formed body 312 in the step (S330) has been described in the aforementioned twelfth embodiment, coil 321 may be rotated in the circumferential direction of formed body 312 while fixing formed body 312, or coil 321 may be relatively rotated along the circumferential direction of formed body 312 by rotating both of coil 321 and formed body 312. However, a wire or the like supplying the current to coil 321 is necessary for coil 321, and hence it is for the most part rational to fix coil 321 as described above.

While the length of coil 321 as an induction heating member in the circumferential direction of formed body 312 can be so properly decided as to efficiently implement homogeneous heating in the step (S330), the same can be set to about 1/12 of the length of the region to be heated, i.e., a length of such a degree that a central angle with respect to the central axis of formed body (inner ring) 312 becomes 30°, for example.

In order to suppress dispersion in temperature in the circumferential direction in the step (S330), a step of retaining formed body 312 in a state where the heating is stopped is preferably provided after completion of the induction heating and before the cooling to the temperature of not more than the Mₛ point in the step (S340).

### (Thirteenth Embodiment)

A thirteenth embodiment in which rolling bearings according to the present invention are employed as bearings for a wind turbine generator (rolling bearings for a wind turbine generator) is now described.

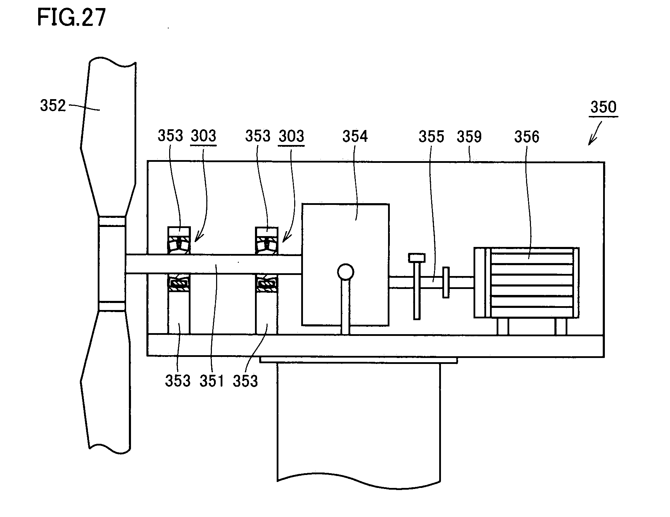

Referring to Fig. 27, a wind turbine generator 350 includes a blade 352 which is a swirler, a main shaft 351 connected to blade 352 on one end to include a center shaft of blade 352 and a speed increaser 354 connected to another end of main shaft 351. Further, speed increaser 354 includes an output shaft 355, and output shaft 355 is connected to a generator 356. Main shaft 351 is supported by main shaft bearings 303 which are rolling bearings for a wind turbine generator, to be rotatable on an axis. A plurality of (in Fig. 27 two) main shaft bearings 303 are arranged in line in the axial direction of main shaft 351, and held by housings 353 respectively. Main shaft bearings 303, housings 353, speed increaser 354 and generator 356 are stored in a nacelle 359 which is a machinery room. Main shaft 351 protrudes from nacelle 359 on one end, and is connected to blade 352.

Operation of wind turbine generator 350 is now described. Referring to Fig. 27, when blade 352 rotates in the circumferential direction by receiving wind power, main shaft 351 connected to blade 352 rotates on the axis while being supported by main shaft bearings 303 with respect to housings 353. The rotation of main shaft 351 is transmitted to speed increaser 354 to be speeded up, and converted to rotation of output shaft 355 on an axis. The rotation of output shaft 355 is transmitted to generator 356, and electromotive force is so generated by electromagnetic induction that power generation is achieved.

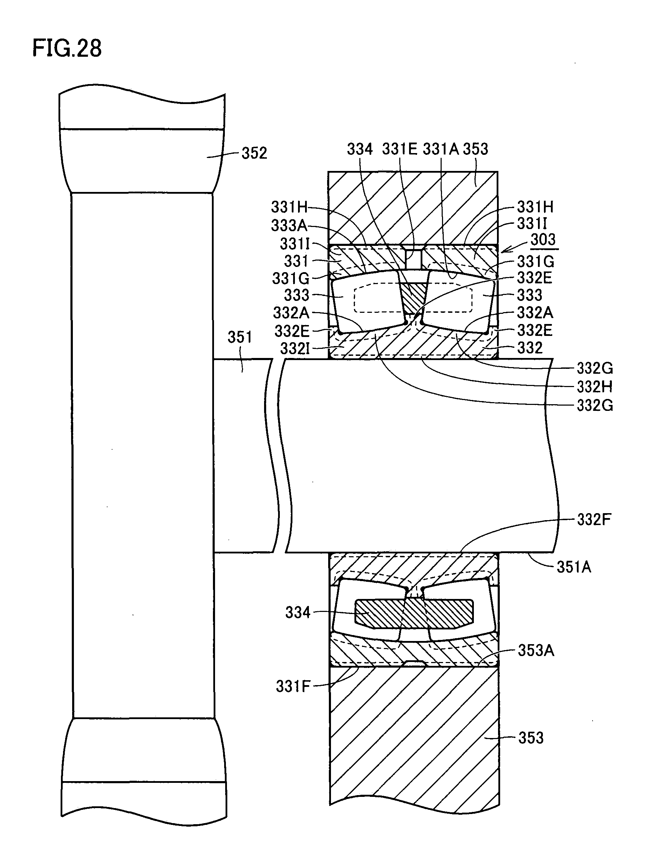

A support structure for main shaft 351 of wind turbine generator 350 is now described. Referring to Fig. 28, each main shaft bearing 303 as a rolling bearing for a wind turbine generator includes an annular outer ring 331 as a bearing ring of the rolling bearing for a wind turbine generator, an annular inner ring 332 as a bearing ring of the rolling bearing for a wind turbine generator arranged on the inner peripheral side of outer ring 331, and a plurality of rollers 333 arranged between outer ring 331 and inner ring 332 and held by an annular cage 334. An outer ring rolling contact surface 331A is formed on the inner peripheral surface of outer ring 331, and inner ring rolling contact surfaces 332A are formed on the outer peripheral surface of inner ring 332. Outer ring 331 and inner ring 332 are so arranged that inner ring rolling contact surfaces 332A are opposed to outer ring rolling contact surface 331A. Further, plurality of rollers 333 are in contact with outer ring rolling contact surface 331A and inner ring rolling contact surfaces 332A on roller contact surfaces 333A along the respective ones of two inner ring rolling contact surfaces 332A, and held by cage 334 and arranged at a prescribed pitch in the circumferential direction, to be rollably held on double rows (two rows) of annular raceways. A through-hole 331E passing through outer ring 331 in the radial direction is formed in outer ring 331. A lubricant can be supplied to a space between outer ring 331 and inner ring 332 through this through-hole 331E. Outer ring 331 and inner ring 332 of main shaft bearing 303 are mutually relatively rotatable, due to the aforementioned structure.

On the other hand, main shaft 351 connected to blade 352 passes through inner ring 332 of main shaft bearing 303, is in contact with a fitting surface 332F which is an inner peripheral surface of the inner ring on an outer peripheral surface 351A, and fitted into and fixed to inner ring 332. Outer ring 331 of main shaft bearing 303 is fitted to come into contact with an inner wall 353A of a through-hole formed in housing 353 on a fitting surface 331F which is an outer peripheral surface, and fixed to housing 353. Main shaft 351 connected to blade 352 is rotatable on the axis with respect to outer ring 331 and housing 353 integrally with inner ring 332, due to the aforementioned structure.

Further, flange portions 332E protruding toward outer ring 331 are formed on both ends of inner ring rolling contact surfaces 332A in the width direction. Thus, a load in the axial direction (axial direction) of main shaft 351 caused by blade 352 receiving wind is supported. Outer ring rolling contact surface 331A has a spherical surface shape. Therefore, outer ring 331 and inner ring 332 can mutually form an angle while centering on the center of this spherical surface on a section perpendicular to the rolling direction of rollers 333. In other words, main shaft bearing 303 is a double-row self-aligning roller bearing. Consequently, even in a case where main shaft 351 is deflected due to blade 352 receiving wind, housing 353 can stably rotatably hold main shaft 351 through main shaft bearing 303.

Outer ring 331 and inner ring 332 as bearing rings of a rolling bearing for a wind turbine generator according to the thirteenth embodiment have structures similar to those of outer ring 311 and inner rings 312 according to the aforementioned twelfth embodiment. In other words, outer ring 331 and inner ring 332 have inner diameters of at least 1000 mm, similarly to outer ring 311 and inner rings 312. Further, outer ring 331 and inner ring 332 include rolling contact surface quenched layers 331G and 332G formed along rolling contact surfaces 331A and 332A over the entire circumferences to include rolling contact surfaces 331A and 332A, fitting surface quenched layers 331H and 332H formed along fitting surfaces 331F and 332F to include fitting surface 331F fitting with housing 353 which is another member or fitting surface 332F fitting with main shaft 351 which is another member, and unhardened regions 331I and 332I formed between rolling contact surface quenched layers 331G and 332G and fitting surface quenched layers 331H and 332H. The thicknesses of fitting surface quenched layers 331H and 332H are smaller than the thicknesses of rolling contact surface quenched layers 331G and 332G. Consequently, aforementioned outer ring 331 and inner ring 332 have become bearing rings of a large-sized roller bearing in which rolling contact surface quenched layers 331G and 332G are formed along rolling contact surfaces 331A and 332A to improve durability. Further, each main shaft bearing 303 (self-aligning roller bearing) including aforementioned outer ring 331 and inner ring 332 has become a large-sized roller bearing excellent in durability.

The bearing ring and the roller bearing according to the present invention are suitable for a bearing ring of a large-sized roller bearing and a roller bearing including the bearing ring. While the bearing rings for a wind turbine generator have been described as examples of the large-sized rolling bearing in the aforementioned thirteenth embodiment, application to another large-sized rolling bearing is also possible. More specifically, the bearing ring and the rolling bearing according to the present invention can be suitably applied to a rolling bearing for a CT scanner supporting a rotatable mounting on which an X-ray irradiation portion of a CT scanner is set to be rotatable with respect to a fixed mounting arranged to be opposed to the rotatable mounting, for example. Further, the bearing ring and the rolling bearing according to the present invention is applicable to a bearing ring and a rolling bearing of arbitrary modes such as a deep groove ball bearing, an angular contact ball bearing, a cylindrical roller bearing, a tapered roller bearing, a self-aligning roller bearing or a thrust ball bearing, for example. While the case where both of the inner ring and the outer ring are bearing rings according to the present invention has been described in the aforementioned embodiment, the rolling bearing according to the present invention is not restricted to this, but one of the inner ring and the outer ring may be the bearing ring according to the present invention.

### (Fourteenth Embodiment)

A fourteenth embodiment is now described. While a method for producing an outer ring is mainly described as a method for producing a bearing ring, an inner ring can also be similarly produced.

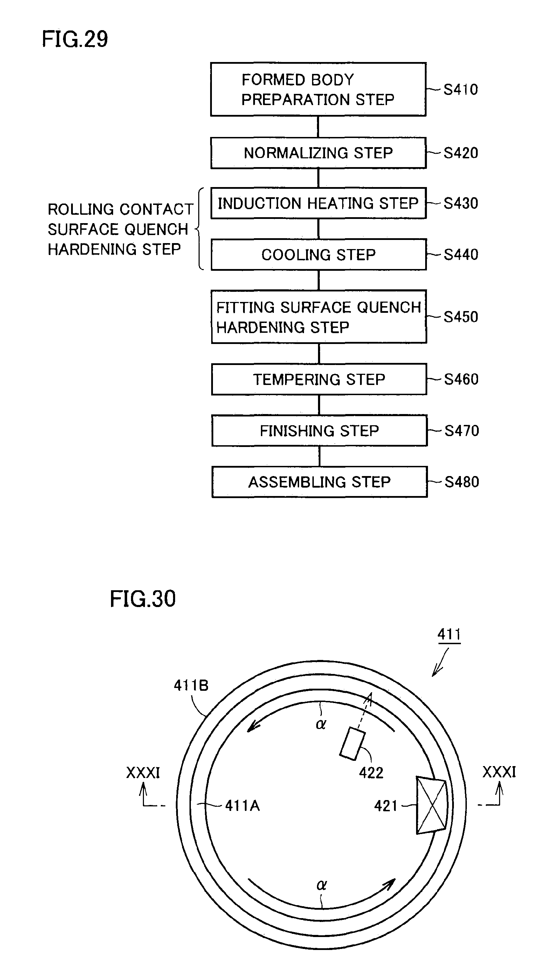

Referring to Fig. 29, a formed body preparation step is first carried out as a step (S410) in the method for producing an outer ring according to this embodiment. In this step (S410), a steel stock having an arbitrary component composition suitable to induction quenching, such as a steel stock containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity is prepared and working such as forging or turning is executed, whereby a formed body having a shape responsive to a desired shape of an outer ring is prepared. More specifically, a formed body responsive to the shape of an outer ring having an inner diameter of at least 1000 mm is prepared. When the outer ring to be produced is particularly large and higher quenchability is required to steel, a steel stock to which at least 0.35 mass % and not more than 0.75 mass % of nickel is added in addition to the aforementioned alloy components may be employed. As steel satisfying the aforementioned component composition, JIS SUP13, SCM 445, SAE standard 8660H or the like can be listed, for example.

Then, a normalizing step is carried out as a step (S420). In this step (S420), the formed body prepared in the step (S410) is heated to a temperature of at least a transformation A₁ point and thereafter cooled to a temperature of less than the transformation A₁ point, whereby normalizing is executed. At this time, a cooling rate in the cooling in the normalizing may simply be a cooling rate at which the steel constituting the formed body does not transform into martensite, i.e., a cooling rate of less than a critical cooling rate. Hardness of the formed body after the normalizing becomes high when this cooling rate increases, and becomes low when the cooling rate decreases. Therefore, desired hardness can be supplied to the formed body by adjusting the cooling rate.

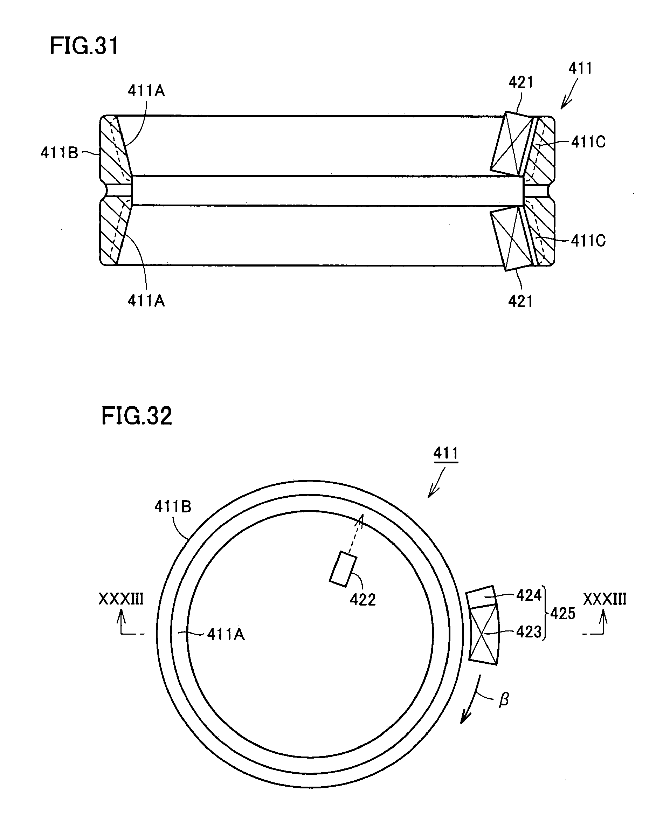

Then, referring to Fig. 29, a rolling contact surface quench hardening step is carried out. This rolling contact surface quench hardening step includes an induction heating step carried out as a step (S430) and a cooling step carried out as a step (S440). In the step (S430), referring to Figs. 30 and 31, coils 421 as induction heating members are arranged to face part of rolling contact surfaces 411A (annular regions) which are surfaces where rolling elements must roll in a formed body (outer ring) 10. Two coils 421 are arranged to face respective ones of two rows of rolling contact surfaces.

Then, a formed body 411 is rotated on a central axis, more specifically in the direction of arrow α, while a high-frequency current is supplied to coils 421 from a power source (not shown). Thus, surface layer regions of formed body 411 including rolling contact surfaces 411A are induction-heated to a temperature of at least the A₁ point, and annular heated regions 411C along rolling contact surfaces 411A are formed. At this time, the temperature of the surfaces of rolling contact surfaces 411A is measured with a thermometer 422 such as a radiation thermometer, and managed.

Then, in the step (S440), water as a cooling liquid, for example, is injected toward the whole of formed body 411 including heated regions 411C formed in the step (S430), whereby the whole of two rows of heated regions 411C are simultaneously cooled to a temperature of not more than an Mₛ point. Thus, heated regions 411C transform into martensite, and harden to become rolling contact surface quenched layers 411C. Through the aforementioned procedure, induction quenching is executed, and the rolling contact surface quench hardening step is completed.

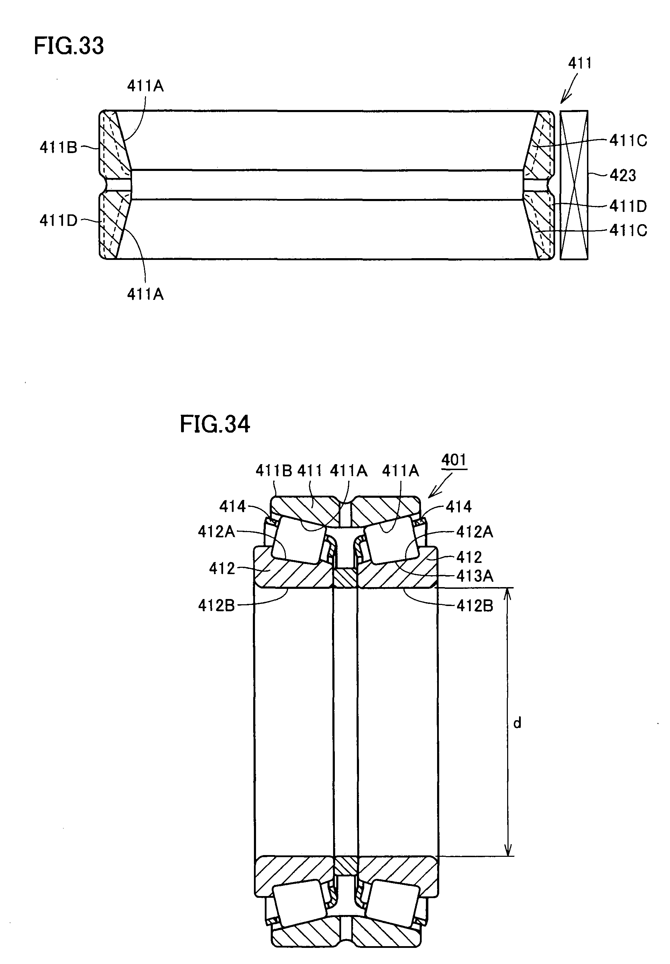

Then, a fitting surface quench hardening step is carried out as a step (S450). In this step (S450), a region of formed body 411 including a fitting surface 411B is quench-hardened. More specifically, referring to Figs. 32 and 33, a transfer quenching apparatus 425 including a coil 423 which is an induction heating member and a cooling liquid injection portion 424 as a cooling member arranged adjacently to coil 423 is first arranged to face part of fitting surface 411B. Then, transfer quenching apparatus 425 moves in the circumferential direction (direction of arrow β) along fitting surface 411B. At this time, a high-frequency current is supplied to coil 423 from a power source (not shown). Thus, a region of fitting surface 411B of formed body 411 opposed to coil 423 is induction-heated to a temperature of at least the A₁ point. On the other hand, a cooling liquid is injected from cooling liquid injection portion 424 toward fitting surface 411B of formed body 411. Consequently, the region of fitting surface 411B induction-heated to the temperature of at least the A₁ point with coil 423 is cooled to a temperature of not more than the Mₛ point by the cooling liquid injected from cooling liquid injection portion 424, and quench-hardened. Such quench hardening is successively executed following movement of transfer quenching apparatus 425, whereby a fitting surface quenched layer 411D is formed as shown in Fig. 33.

Then, a tempering step is carried out as a step (S460). In this step (S460), formed body 411 partially quench-hardened in the steps (S430) to (S450) is charged into a furnace, for example, heated to a temperature of not more than the A₁ point and retained for a prescribed time, whereby tempering is executed.

Then, a finishing step is carried out as a step (S470). In this step (S470), finishing such as polishing is executed on rolling contact surfaces 411A, for example. Through the aforementioned process, outer ring 411 is completed, and production of the outer ring according to this embodiment is completed. Consequently, outer ring 411, having an inner diameter of at least 1000 mm, in which rolling contact surface quenched layers 411C are homogeneously formed by induction quenching along rolling contact surfaces 411A over the entire circumferences is completed.

Further, an assembling step is carried out as a step (S480). In this step (S480), outer ring 411 prepared as described above and inner rings 412 prepared similarly to aforementioned outer ring 411 are combined with separately prepared rollers 413, cages 414 and the like, whereby a double row tapered roller bearing 401 shown in Fig. 34 is assembled, for example. Through the aforementioned procedure, the method for producing a rolling bearing according to this embodiment is completed.

Double row tapered roller bearing 401 which is the roller bearing in this embodiment includes, referring to Fig. 34, annular outer ring 411, two annular inner rings 412 arranged inside outer ring 411, and plurality of tapered rollers 413 arranged between outer ring 411 and inner rings 412. Two rows of outer ring rolling contact surfaces 411A are formed on the inner peripheral surface of outer ring 411, while one row of inner ring rolling contact surface 412A is formed on the outer peripheral surface of each of two inner rings 412. One outer ring 411 and two inner rings 412 are so arranged that inner ring rolling contact surface 412A of one inner ring 412 is opposed to one outer ring rolling contact surface 411A and inner ring rolling contact surface 412A of other inner ring 412 is opposed to other outer ring rolling contact surface 411A. Further, plurality of tapered rollers 413 are in contact with outer ring rolling contact surfaces 411A and inner ring rolling contact surfaces 412A along the respective ones of outer ring rolling contact surfaces 411A, held by cages 414 and arranged at a prescribed pitch in the circumferential direction, to be rollably held on two rows of annular raceways. Outer ring 411 and inner rings 412 of double row tapered roller bearing 401 are mutually relatively rotatable, due to the aforementioned structure.

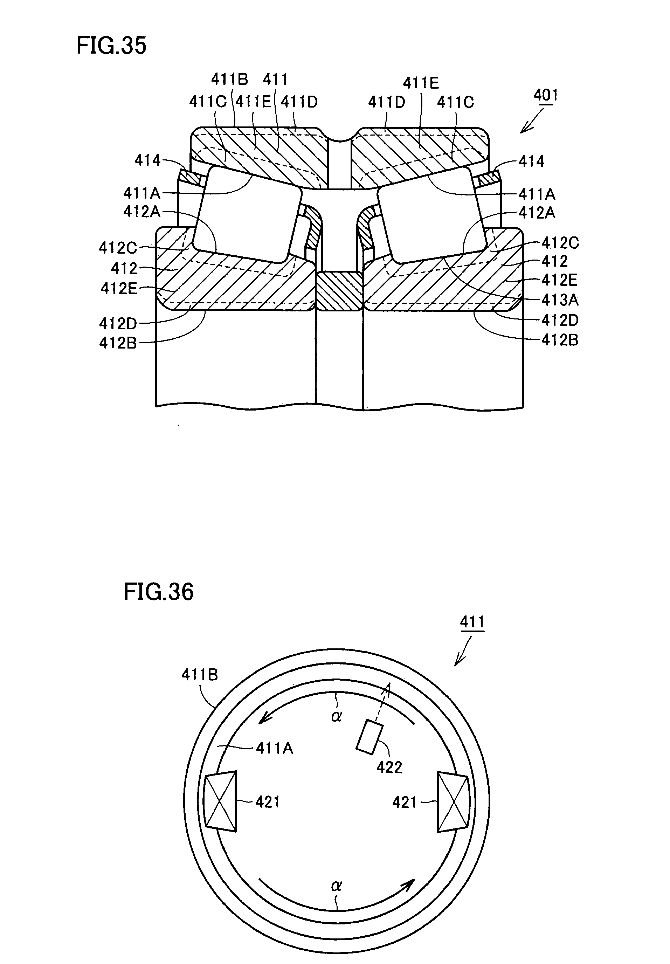

Referring to Figs. 34 and 35, further, outer ring 411 and inner rings 412 have inner diameters of at least 1000 mm. Outer ring 411 and inner rings 412 include rolling contact surface quenched layers 411C and 412C formed along rolling contact surfaces 411A and 412A over the entire circumferences to include rolling contact surfaces 411A and 412A which are surfaces where rollers 413 which are rolling elements must roll, fitting surface quenched layers 411D and 412D formed along fitting surfaces 411B and 412B to include fitting surfaces 411B and 412B fitting with other members such as the housings, shafts and the like, and unhardened regions 411E and 412E formed between rolling contact surface quenched layers 411C and 412C and fitting surface quenched layers 411D and 412D. The thicknesses of fitting surface quenched layers 411D and 412D are smaller than the thicknesses of rolling contact surface quenched layers 411C and 412C.

In the method for producing a bearing ring (outer ring 411) according to this embodiment, coils 421 which are induction heating members arranged to face part of annular regions to become rolling contact surfaces 411A relatively rotate along the circumferential direction, whereby heated regions 411C are formed on formed body 411. Therefore, the production cost for a quenching apparatus can be suppressed by miniaturizing coils 421. Further, the whole heated regions are simultaneously cooled to the temperature of not more than the Mₛ point in this embodiment, whereby it becomes possible to simultaneously form quench-hardened layers over the entire circumferences, and residual stress is inhibited from concentrating on partial regions. In addition, fitting surface quenched layer 411D is formed by transfer quenching as described above in this embodiment so that the region heated with coil 423 is cooled with cooling liquid injection portion 424 immediately after the heating, whereby hardness reduction of previously formed rolling contact surface quenched layer 411C is suppressed. Consequently, according to the method for producing a bearing ring according to this embodiment, rolling contact surface quenched layer 411C can be homogeneously formed by induction quenching over the entire circumference while suppressing the production cost for the quenching apparatus, and fitting surface quenched layer 411D can be formed while suppressing reduction in hardness of rolling contact surface 411A. According to the method for producing a rolling bearing according to this embodiment, further, double row tapered roller bearing 401 including a bearing ring in which rolling contact surface quenched layer 411C is homogeneously formed by induction quenching along rolling contact surface 411A over the entire circumference and fitting surface quenched layer 411D is formed along fitting surface 411B while suppressing reduction in hardness of rolling contact surface 411A can be produced at a low cost.

While the normalizing step carried out as the aforementioned step (S420) is not an essential step in the method for producing a bearing ring according to the present invention, the hardness of a formed body made of steel such as JIS SUP13, SCM445, SAE standard 8660H or the like can be adjusted while suppressing occurrence of quench cracking by carrying out this.

In this step (S420), shot blasting may be executed while formed body 411 is cooled, by spraying hard particles onto formed body 411 along with gas. Thus, the shot blasting can be executed simultaneously with air-blast cooling at the time of the normalizing, whereby scales formed on a surface layer portion of formed body 411 are removed, and characteristic reduction of outer ring 411 resulting from formation of the scales or reduction of thermal conductivity resulting from formation of the scales is suppressed. As the hard particles (projection material), metal particles made of steel or cast iron can be employed, for example.

While formed body 411 may rotate at least once in the aforementioned step (S430), the same preferably rotates a plurality of times, in order to implement more homogeneous quench hardening by suppressing dispersion in temperature in the circumferential direction. In other words, coils 421 as induction heating members preferably relatively rotate at least twice along the circumferential direction of rolling contact surface 411A of formed body 411.

In outer ring 411 and inner rings 412, further, unhardened regions 411E and 412E are formed between rolling contact surface quenched layers 411C and 412C and fitting surface quenched layers 411D and 412D, while the thicknesses of fitting surface quenched layers 411D and 412D are smaller than the thicknesses of rolling contact surface quenched layers 411C and 412C. Thus, durability of outer ring 411 and inner rings 412 against rolling fatigue further improves. The thicknesses of quenched layers, i.e., the thicknesses of regions heated by induction heating can be adjusted by controlling the frequency of the current supplied to the coil, the output of the power source and the like.

### (Fifteenth Embodiment)

A fifteenth embodiment which is a further embodiment of the present invention is now described. A method for producing an outer ring according to the fifteenth embodiment is basically carried out similarly to the case of the fourteenth embodiment, and attains similar effects. However, the method for producing an outer ring according to the fifteenth embodiment is different from the case of the fourteenth embodiment in arrangement of coils 421 in a step (S430).

In other words, referring to Fig. 36, pair of coils 421 are arranged as induction heating members in the step (S430) in the fifteenth embodiment. A formed body 411 is rotated in a direction of arrow α, while a high-frequency current is supplied to coils 421 from a power source (not shown). Thus, a surface layer region of formed body 411 including a rolling contact surface 411A is induction-heated to a temperature of at least an A₁ point, and an annular heated region 411C along rolling contact surface 411A is formed.

Thus, plurality of (in this embodiment two) coils 421 are arranged along the circumferential direction of formed body 411, whereby the method for producing outer ring 411 of a rolling bearing according to the fifteenth embodiment has become a method for producing a bearing ring capable of implementing homogeneous quench hardening by suppressing dispersion in temperature in the circumferential direction. In order to further suppress dispersion in temperature in the circumferential direction, coils 421 are preferably arranged at regular intervals in the circumferential direction of formed body 411.

### (Sixteenth Embodiment)

A sixteenth embodiment which is a further embodiment of the present invention is now described. A method for producing an inner ring according to the sixteenth embodiment is basically carried out similarly to the cases of the fourteenth and fifteenth embodiments, and attains similar effects. However, the method for producing an inner ring according to the sixteenth embodiment is different from the cases of the fourteenth and fifteenth embodiments in arrangement of thermometers 422 in a step (S430).

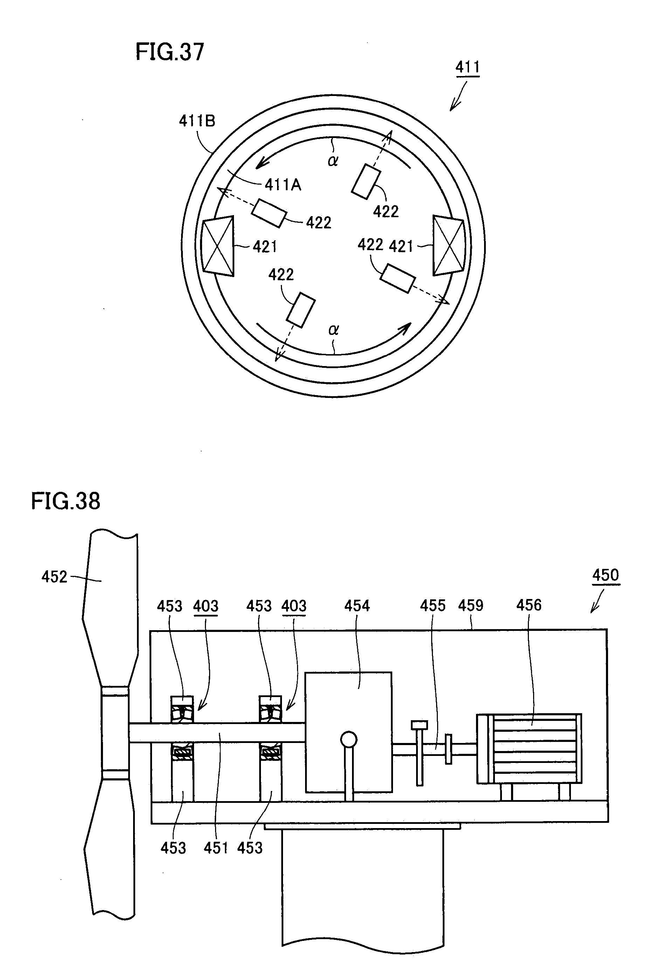

In other words, referring to Fig. 37, temperatures on a plurality of portions (four portions here) of a rolling contact surface 411A which is a heated region are measured in the step (S430) in the sixteenth embodiment. More specifically, plurality of thermometers 422 are arranged at regular intervals along the circumferential direction of rolling contact surface 411A of a formed body 411, and temperatures of positions at regular intervals in the circumferential direction are measured in the step (S430) in the sixteenth embodiment.

Thus, the temperatures on the plurality of portions are simultaneously measured in the circumferential direction of rolling contact surface 411A, whereby quench hardening can be executed by rapidly cooling formed body 411 after confirming that homogeneous heating is implemented in the circumferential direction of rolling contact surface 411A. Consequently, more homogeneous quench hardening can be implemented in the circumferential direction of rolling contact surface 411A according to the method for producing an outer ring of a rolling bearing according to the sixteenth embodiment.

While the case of fixing coils 421 and rotating formed body 411 has been described in the aforementioned embodiment, coils 421 may be rotated in the circumferential direction of formed body 411 while fixing formed body 411, or coils 421 may be relatively rotated along the circumferential direction of formed body 411 by rotating both of coils 421 and formed body 411. However, wires or the like supplying a current to coils 421 are necessary for coils 421, and hence it is for the most part rational to fix coils 421 as described above.

While a case where an outer ring of a double row tapered roller bearing is produced as an example of a bearing ring has been described in the aforementioned embodiment, a bearing ring to which the present invention is applicable is not restricted to this, but may be a bearing ring of a radial roller bearing or a bearing ring of a thrust bearing, for example. In a case of heating an inner ring of a radial rolling bearing, for example, in the step (S420), coils 421 may be arranged to face a rolling contact surface formed on an outer peripheral side of a formed body. In a case of heating a bearing ring of a thrust rolling bearing, for example, in the step (S420), coils 421 may be arranged to face a rolling contact surface formed on an end surface side of a formed body.

While the length of coils 421 as induction heating members in the circumferential direction of formed body 411 can be so properly decided as to efficiently implement homogeneous heating, the same can be set to about 1/12 of the length of the region to be heated, i.e., a length of such a degree that a central angle with respect to the central axis of the formed body (bearing ring) becomes 30°, for example.

In order to suppress dispersion in temperature in the circumferential direction, a step of retaining the formed body in a state where the heating is stopped is preferably provided after completion of the induction heating and before the cooling to the temperature of not more than the Mₛ point.

### (Seventeenth Embodiment)

A seventeenth embodiment in which rolling bearings produced according to the method for producing a rolling bearing according to the present invention are employed as bearings for a wind turbine generator (rolling bearings for a wind turbine generator) is now described.

Referring to Fig. 38, a wind turbine generator 450 includes a blade 452 which is a swirler, a main shaft 451 connected to blade 452 on one end to include a center shaft of blade 452 and a speed increaser 454 connected to another end of main shaft 451. Further, speed increaser 454 includes an output shaft 455, and output shaft 455 is connected to a generator 456. Main shaft 451 is supported by main shaft bearings 403 which are rolling bearings for a wind turbine generator, to be rotatable on an axis. A plurality of (in Fig. 38 two) main shaft bearings 403 are arranged in line in the axial direction of main shaft 451, and held by housings 453 respectively. Main shaft bearings 403, housings 453, speed increaser 454 and generator 456 are stored in a nacelle 459 which is a machinery room. Main shaft 451 protrudes from nacelle 459 on one end, and is connected to blade 452.

Operation of wind turbine generator 450 is now described. Referring to Fig. 38, when blade 452 rotates in the circumferential direction by receiving wind power, main shaft 451 connected to blade 452 rotates on the axis while being supported by main shaft bearings 403 with respect to housings 453. The rotation of main shaft 451 is transmitted to speed increaser 454 to be speeded up, and converted to rotation of output shaft 455 on an axis. The rotation of output shaft 455 is transmitted to generator 456, and electromotive force is so generated by electromagnetic induction that power generation is achieved.

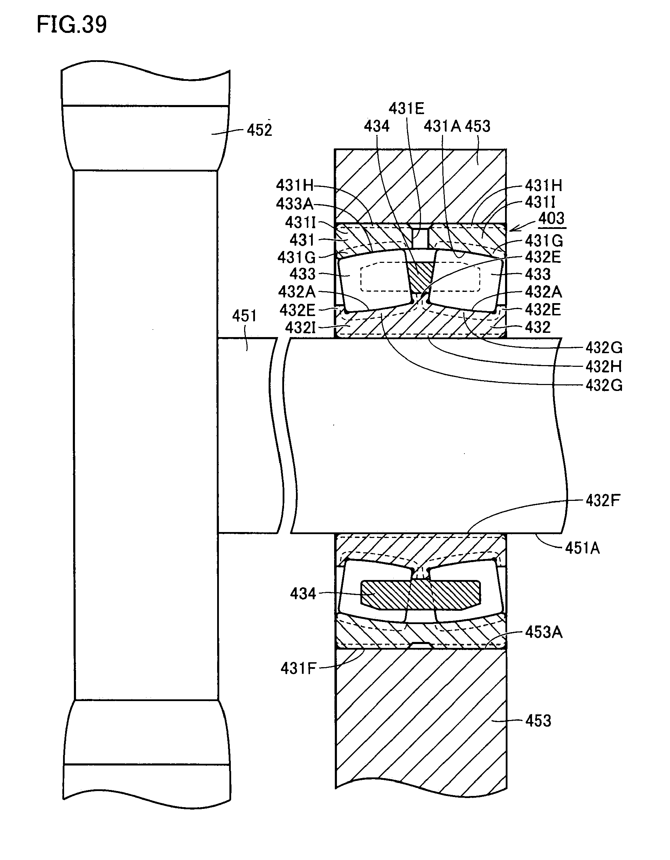

A support structure for main shaft 451 of wind turbine generator 450 is now described. Referring to Fig. 39, each main shaft bearing 403 as a rolling bearing for a wind turbine generator includes an annular outer ring 431 as a bearing ring of the rolling bearing for a wind turbine generator, an annular inner ring 432 as a bearing ring of the rolling bearing for a wind turbine generator arranged on the inner peripheral side of outer ring 431, and a plurality of rollers 433 arranged between outer ring 431 and inner ring 432 and held by an annular cage 434. An outer ring rolling contact surface 431A is formed on the inner peripheral surface of outer ring 431, and inner ring rolling contact surfaces 432A are formed on the outer peripheral surface of inner ring 432. Outer ring 431 and inner ring 432 are so arranged that inner ring rolling contact surfaces 432A are opposed to outer ring rolling contact surface 431A. Further, plurality of rollers 433 are in contact with outer ring rolling contact surface 431A and inner ring rolling contact surfaces 432A on roller contact surfaces 433A along the respective ones of two inner ring rolling contact surfaces 432A, held by cage 434 and arranged at a prescribed pitch in the circumferential direction, to be rollably held on double rows (two rows) of annular raceways. A through-hole 431E passing through outer ring 431 in the radial direction is formed in outer ring 431. A lubricant can be supplied to a space between outer ring 431 and inner ring 432 through this through-hole 431E. Outer ring 431 and inner ring 432 of main shaft bearing 403 are mutually relatively rotatable, due to the aforementioned structure.

On the other hand, main shaft 451 connected to blade 452 passes through inner ring 432 of main shaft bearing 403, is in contact with a fitting surface 432F which is an inner peripheral surface of the inner ring on an outer peripheral surface 451A, and fitted into and fixed to inner ring 432. Outer ring 431 of main shaft bearing 403 is fitted to come into contact with an inner wall 453A of a through-hole formed in housing 453 on a fitting surface 431F which is an outer peripheral surface, and fixed to housing 453. Main shaft 451 connected to blade 452 is rotatable on the axis with respect to outer ring 431 and housing 453 integrally with inner ring 432, due to the aforementioned structure.

Further, flange portions 432E protruding toward outer ring 431 are formed on both ends of inner ring rolling contact surfaces 432A in the width direction. Thus, a load in the axial direction (axial direction) of main shaft 451 caused by blade 452 receiving wind is supported. Outer ring rolling contact surface 431A has a spherical surface shape. Therefore, outer ring 431 and inner ring 432 can mutually form an angle while centering on the center of this spherical surface on a section perpendicular to the rolling direction of rollers 433. In other words, main shaft bearing 403 is a double-row self-aligning roller bearing. Consequently, even in a case where main shaft 451 is deflected due to blade 452 receiving wind, housing 453 can stably rotatably hold main shaft 451 through main shaft bearing 403.

Outer ring 431 and inner ring 432 as bearing rings of a rolling bearing for a wind turbine generator according to the seventeenth embodiment are produced by a production method similar to that for outer ring 411 and inner rings 412 in the aforementioned fourteenth embodiment, and have similar structures. In other words, outer ring 431 and inner ring 432 have inner diameters of at least 1000 mm, similarly to outer ring 411 and inner rings 412. Further, outer ring 431 and inner ring 432 include rolling contact surface quenched layers 431G and 432G formed along rolling contact surfaces 431A and 432A over the entire circumferences to include rolling contact surfaces 431A and 432A, fitting surface quenched layers 431H and 432H formed along fitting surfaces 431F and 432F to include fitting surface 431F fitting with housing 453 which is another member or fitting surface 432F fitting with main shaft 451 which is another member, and unhardened regions 431I and 432I formed between rolling contact surface quenched layers 431G and 432G and fitting surface quenched layers 431H and 432H. The thicknesses of fitting surface quenched layers 431H and 432H are smaller than the thicknesses of rolling contact surface quenched layers 431G and 432G. Consequently, aforementioned outer ring 431 and inner ring 432 have become bearing rings of a large-sized roller bearing in which rolling contact surface quenched layers 431G and 432G are formed along rolling contact surfaces 431A and 432A to improve durability. Further, each main shaft bearing 403 (self-aligning roller bearing) including aforementioned outer ring 431 and inner ring 432 has become a large-sized roller bearing excellent in durability.

The bearing ring and the roller bearing according to the present invention are suitable to a bearing ring of a large-sized roller bearing and a roller bearing including the bearing ring. While the bearing rings for a wind turbine generator have been described as examples of the large-sized rolling bearing in the aforementioned seventeenth embodiment, application to another large-sized rolling bearing is also possible. More specifically, the bearing ring and the rolling bearing according to the present invention can be suitably applied to a rolling bearing for a CT scanner supporting a rotatable mounting on which an X-ray irradiation portion of a CT scanner is set to be rotatable with respect to a fixed mounting arranged to be opposed to the rotatable mounting, for example. Further, the bearing ring and the rolling bearing according to the present invention are applicable to a bearing ring and a rolling bearing of arbitrary modes such as a deep groove ball bearing, an angular contact ball bearing, a cylindrical roller bearing, a tapered roller bearing, a self-aligning roller bearing or a thrust ball bearing, for example. While the case where both of the inner ring and the outer ring are bearing rings produced by the method for producing a bearing ring according to the present invention has been described in the aforementioned embodiment, the rolling bearing according to the present invention is not restricted to this, but one of the inner ring and the outer ring may be that produced by the method for producing a bearing ring according to the present invention.

### (Example)

An experiment of heat-treating a formed body (inner ring of a roller bearing) made of steel with the method for heat-treating a ring-shaped member according to the present invention and investigating characteristics of the formed body was conducted. The procedure of the experiment is as follows:

First, referring to Figs. 2 and 3, formed body 10 consisting of JIS S53C and having an outer diameter d₁ of 2400 mm, a minimum diameter d₂ of rolling contact surface 11 of 2350 mm, an inner diameter d₃ of 2200 mm and a width of 100 mm was prepared, and induction quenching was performed on formed body 10 by carrying out steps similar to the steps (S20) and (S30) in the aforementioned first embodiment. At this time, the power of a power source, the frequency of the power source and the rotational speed of formed body 10 were set to 65 kW, 10 kHz and 30 rpm respectively. After the temperature of rolling contact surface 11 reached 950°C in the step (S20), the whole of heated region 11A was cooled to a temperature of not more than an Mₛ point in the step (S30) (Example).

On the other hand, that obtained by preparing a formed body similar to that of the aforementioned Example, executing the aforementioned conventional transfer quenching and leaving a soft zone (comparative example 1) and that formed by employing two coils oppositely moving in the circumferential direction of a formed body for avoiding formation of a soft zone as described in the aforementioned Patent Literature 2 (comparative example 2) were also prepared. In comparative examples, the power of a power source, the frequency of the power source and a feed rate for coils were set to 65 kW, 10 kHz and 2 mm/s respectively. As to quenched formed bodies according to the aforementioned Example and comparative examples, residual stress distributions and hardness distributions in depth directions around rolling contact surfaces were investigated. As to comparative example 2, this investigation was conducted as to a region where quenching was finally executed. As to the quenched formed bodies according to the aforementioned Example and comparative examples, measurement of circularity was conducted.

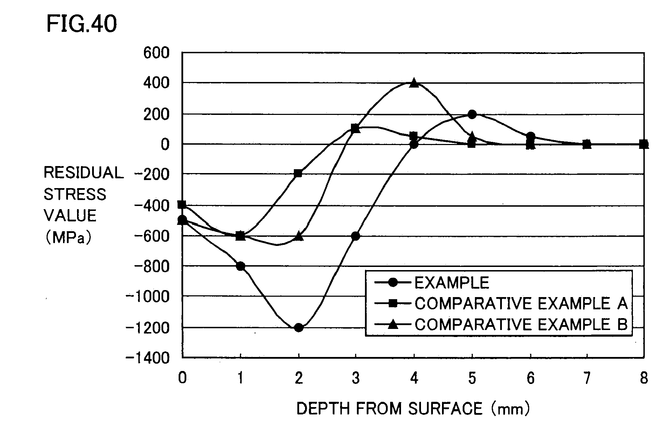

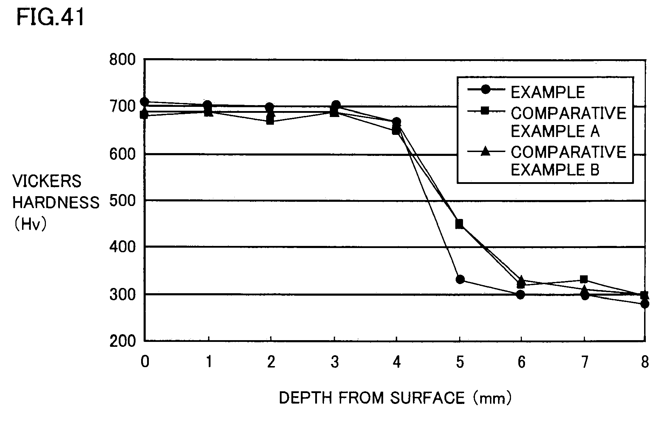

Results of the experiment are now described with reference to Figs. 40 and 41. Referring to Figs. 40 and 41, the axes of abscissas show depths from rolling contact surfaces (surfaces). The axis of ordinates in Fig. 40 shows residual stress values while expressing tensile stress as positive and compressive stress as negative, and the axis of ordinates in Fig. 41 shows Vickers hardness.

Referring to Fig. 40, tensile stress of about 4000 MPa at the maximum innerly remains in Example B, and it is apprehended that quench cracking occurs. In Example of the present invention, on the other hand, the maximum value of inner tensile stress is suppressed to about 200 MPa. Referring to Fig. 41, no remarkable difference is present in Example and comparative examples as to the hardness distributions in the depth directions around the rolling contact surfaces, and it can be said that Example of the present invention has an excellent hardness distribution.

As a result of performing the measurement of the circularity, the circularity of Example was most excellent, and no significant difference was observed between comparative example A and comparative example B.

From the aforementioned results of the experiment, it has been confirmed that occurrence of quench cracking or the like can be suppressed by forming an annular quench-hardened region homogeneous in the circumferential direction according to the method for heating a ring-shaped member and the method for producing a ring-shaped member according to the present invention.

While the cases where JIS S53C is employed as the steel forming the ring-shaped members (formed bodies) have been described in the aforementioned embodiments and Example, the employable steel is not restricted to this. Any steel such as carbon steel for machine construction such as S55C, high-carbon chromium bearing steel such as SUJ2 or the like can be employed as steel constituting a ring-shaped member, for example. While the bearing rings of rolling bearings have been illustrated as examples of the ring-shaped member in the aforementioned embodiments and Example, a ring-shaped member to which the present invention is applicable is not restricted to these, but the present invention can be applied to various ring-shaped members consisting of steel requiring quench hardening. Further, the present invention is particularly preferably applied to a bearing ring of a large-sized rolling bearing, and more specifically, particularly preferably applied to a bearing ring of a rolling bearing for a CT scanner supporting a rotatable mounting on which an X-ray irradiation portion of a CT scanner is set to be rotatable with respect to a fixed mounting arranged to be opposed to the rotatable mounting or a bearing ring of a bearing for a wind turbine generator supporting a main shaft or a turning portion of a wind turbine for power generation.

The embodiments and Example disclosed this time must be considered as illustrative in all points, and not restrictive. The range of the present invention is shown not by the above description but by the scope of claims for patent, and it is intended that all modifications within the meaning and range equivalent to the scope of claims for patent are included.

### REFERENCE SIGNS LIST

3 main shaft bearing, 10 formed body, 11 rolling contact surface, 11A heated region, 21 coil, 31 outer ring, 31A outer ring rolling contact surface, 31E through-hole, 31F outer peripheral surface, 32 inner ring, 32A inner ring rolling contact surface, 32E flange portion, 32F inner peripheral surface, 33 roller, 33A roller contact surface, 34 cage, 50 wind turbine generator, 51 main shaft, 51A outer peripheral surface, 52 blade, 53 housing, 53A inner wall, 54 speed increaser, 55 output shaft, 56 generator, 59 nacelle, 103 main shaft bearing, 110 formed body (inner ring), 111 rolling contact surface, 111A heated region, 121 coil, 122 thermometer, 131 outer ring, 131A outer ring rolling contact surface, 131E through-hole, 131F outer peripheral surface, 132 inner ring, 132A inner ring rolling contact surface, 132E flange portion, 132F outer peripheral surface, 133 roller, 133A roller contact surface, 134 cage, 150 wind turbine generator, 151 main shaft, 151A outer peripheral surface, 152 blade, 153 housing, 153A inner wall, 154 speed increaser, 155 output shaft, 156 generator, 159 nacelle, 203 main shaft bearing, 210 formed body (inner ring), 211 rolling contact surface, 211A heated region, 221 coil, 221A induction-heated region, 222 thermometer, 231 outer ring, 231A outer ring rolling contact surface, 231E through-hole, 231F fitting surface, 232 inner ring, 232A inner ring rolling contact surface, 232E flange portion, 232F fitting surface, 233 roller, 233A roller contact surface, 234 cage, 250 wind turbine generator, 251 main shaft, 251A outer peripheral surface, 252 blade, 253 housing, 253A inner wall, 254 speed increaser, 255 output shaft, 256 generator, 259 nacelle, 301 double row tapered roller bearing, 303 main shaft bearing, 311 outer ring, 311A outer ring rolling contact surface, 311B, 312B fitting surface, 311C, 312C rolling contact surface quenched layer, 311D, 312D fitting surface quenched layer, 311E, 312E unhardened region, 312 inner ring (formed body), 312A inner ring rolling contact surface, 313 roller, 314 cage, 321, 323 coil, 322 thermometer, 324 cooling liquid injection portion, 325 transfer quenching apparatus, 331 outer ring, 331A outer ring rolling contact surface, 331E through-hole, 331F, 332F fitting surface, 331G, 332G rolling contact surface quenched layer, 331H, 332H fitting surface quenched layer, 331I, 332I unhardened region, 332 inner ring, 332A inner ring rolling contact surface, 332E flange portion, 333 roller, 333A roller contact surface, 334 cage, 350 wind turbine generator, 351 main shaft, 351A outer peripheral surface, 352 blade, 353 housing, 353A inner wall, 354 speed increaser, 355 output shaft, 356 generator, 359 nacelle, 401 double row tapered roller bearing, 403 main shaft bearing, 411 outer ring (formed body), 411A outer ring rolling contact surface, 411B, 412B fitting surface, 411C, 412C rolling contact surface quenched layer (heated region), 411D, 412D fitting surface quenched layer, 411E, 412E unhardened region, 412 inner ring, 412A inner ring rolling contact surface, 413 roller, 414 cage, 421, 423 coil, 422 thermometer, 424 cooling liquid injection portion, 425 transfer quenching apparatus, 431 outer ring, 431A outer ring rolling contact surface, 431E through-hole, 431F, 432F fitting surface, 431G, 432G rolling contact surface quenched layer, 431H, 432H fitting surface quenched layer, 431I, 432I unhardened region, 423 inner ring, 432A inner ring rolling contact surface, 432E flange portion, 433 roller, 433A roller contact surface, 434 cage, 450 wind turbine generator, 451 main shaft, 451A outer peripheral surface, 452 blade, 453 housing, 453A inner wall, 454 speed increaser, 455 output shaft, 456 generator, 459 nacelle.

### ITEMS

1. A method for heat-treating a ring-shaped member, comprising the steps of:
   forming, by relatively rotating an induction heating member (21) arranged to face part of a ring-shaped formed body (10) made of steel for induction-heating said formed body (10) along the circumferential direction of said formed body (10), an annular heated region (11A) heated to a temperature of at least an A₁ point on said formed body (10); and
   simultaneously cooling the whole of said heated region (11A) to a temperature of not more than an Mₛ point.
2. The method for heat-treating a ring-shaped member according to item 1, wherein
   said induction heating member (21) relatively rotates at least twice along the circumferential direction of said formed body (10) in the step of forming said heated region (11A).
3. The method for heat-treating a ring-shaped member according to item 1, wherein
   a plurality of said induction heating members (21) are arranged along the circumferential direction of said formed body (10) in the step of forming said heated region (11A).
4. A method for producing a ring-shaped member, comprising the steps of:
   preparing a ring-shaped formed body (10) made of steel; and
   quench-hardening said formed body (10), wherein
   said formed body (10) is quench-hardened with the method for heat-treating a ring-shaped member according to item 1 in the step of quench-hardening said formed body (10).
5. A ring-shaped member (32) produced according to the method for producing a ring-shaped member according to item 4.
6. A bearing ring (31, 32) of a rolling bearing (3) having an inner diameter of at least 1000 mm, wherein
   a quench-hardened layer of a rolling contact surface (31A, 32A) which is a surface where a rolling element (33) rolls is formed by induction quenching in a uniform depth over the entire circumference.
7. A rolling bearing (3) comprising:
   an inner ring (32);
   an outer ring (31) arranged to enclose the outer peripheral side of said inner ring (32); and
   a plurality of rolling elements (33) arranged between said inner ring (32) and said outer ring (31), wherein
   at least either one of said inner ring (32) and said outer ring (31) is the bearing ring (31, 32) of a rolling bearing according to item 6.
8. The rolling bearing (3) according to item 7, wherein
   a main shaft (51) connected to a blade (52) is penetratingly fixed to said inner ring (32) in a wind turbine generator (50), and said outer ring (31) is fixed to a housing (53), thereby rotatably supporting said main shaft (51) with respect to said housing (53).
9. A method for producing a bearing ring (131, 132) of a rolling bearing (103), comprising the steps of:
   preparing a formed body (110) constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity;
   forming an annular heated region (111A) heated to a temperature of at least an A₁ point on said formed body (110) by relatively rotating an induction heating member (121) arranged to face part of an annular region (111) for becoming a rolling contact surface (131A, 132A) of said bearing ring (131, 132) in said formed body (110) to induction-heat said formed body (110) along the circumferential direction of said annular region (111); and
   simultaneously cooling the whole of said heated region (111A) to a temperature of not more than an Mₛ point.
10. A method for producing a bearing ring (131, 132) of a rolling bearing (103), comprising the steps of:
   preparing a formed body (110) constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity;
   forming an annular heated region (111A) heated to a temperature of at least an A₁ point on said formed body (110) by relatively rotating an induction heating member (121) arranged to face part of an annular region (111) for becoming a rolling contact surface (131A, 132A) of said bearing ring (131, 132) in said formed body (110) to induction-heat said formed body (110) along the circumferential direction of said annular region (111); and
   simultaneously cooling the whole of said heated region (111A) to a temperature of not more than an Mₛ point.
11. A bearing ring (131, 132) of a rolling bearing (103) having an inner diameter of at least 1000 mm,
   constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity, wherein
   a quench-hardened layer is formed by induction quenching along a rolling contact surface (131A, 132A) over the entire circumference.
12. A bearing ring (131, 132) of a rolling bearing (103) having an inner diameter of at least 1000 mm,
   constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity, wherein
   a quench-hardened layer is formed by induction quenching along a rolling contact surface (131A, 132A) over the entire circumference.
13. A method for producing a bearing ring (231, 232) of a rolling bearing, comprising the steps of:
   preparing a formed body (210) constituted of steel;
   forming an annular heated region (211A) heated to a temperature of at least an A₁ point on said formed body (110) by relatively rotating an induction heating coil (221) arranged to face part of an annular region (211) for becoming a rolling contact surface (231A, 232A) of said bearing ring (231, 232) in said formed body (210) to induction-heat said formed body (210) along the circumferential direction of said annular region (211); and
   simultaneously cooling the whole of said heated region (211A) to a temperature of not more than an Mₛ point, wherein
   said induction heating coil (211) having such a shape that a region (221A) facing said annular region (211) and contributing to heating of said annular region (211) is included in the same plane is employed in the step of forming said heated region (211A).
14. A bearing ring (311, 312) of a rolling bearing (301) having an inner diameter of at least 1000 mm, comprising:
   a rolling contact surface quenched layer (311C, 312C) formed along a rolling contact surface (311A, 312A) which is a surface where a rolling element (313) must roll over the entire circumference to include said rolling contact surface (311A, 312A);
   a fitting surface quenched layer (311D, 312D) formed along a fitting surface (311B, 312B) fitting with another member to include said fitting surface (311B, 312B); and
   an unhardened region (311E, 312E) formed between said rolling contact surface quenched layer (311C, 312C) and said fitting surface quenched layer (311D, 312D), wherein
   the thickness of said fitting surface quenched layer (311D, 312D) is smaller than the thickness of said rolling contact surface quenched layer (311C, 312C).
15. A method for producing a bearing ring (411, 412) of a rolling bearing (401), comprising the steps of:
   preparing a formed body (411, 412) constituted of steel;
   forming an annular heated region (411, 412C) heated to a temperature of at least an A₁ point on said formed body (411, 412) by relatively rotating an induction heating member (421) arranged to face part of an annular region (411A, 412A) for becoming a rolling contact surface (411A, 412A) of said bearing ring (411, 412) in said formed body (411, 412) to induction-heat said formed body (411, 412) along the circumferential direction of said annular region (411A, 412A);
   forming a rolling contact surface quenched layer (411C, 412C) along said annular region (41A, 412A) over the entire circumference by simultaneously cooling the whole of said heated region (411C, 412C) to a temperature of not more than an Mₛ point; and
   forming a fitting surface quenched layer (411D, 412D) by relatively moving another induction heating member (423) arranged to face part of a region for becoming a fitting surface (411B, 412B) of said bearing ring (411, 412) in said formed body (411, 412) to induction-heat said formed body (411, 412) along the circumferential direction of the region for becoming said fitting surface (411B, 412B) while cooling the region heated by said another induction heating member (423) with a cooling member (424) following said another induction heating member (423).

## Claims

1. A bearing ring (31, 32) of a rolling bearing (3) having an inner diameter of at least 1000 mm, wherein
a quench-hardened layer of a rolling contact surface (31A, 32A) which is a surface where a rolling element (33) rolls is formed by induction quenching in a uniform depth over the entire circumference.

2. A rolling bearing (3) comprising:
an inner ring (32);
an outer ring (31) arranged to enclose the outer peripheral side of said inner ring (32); and
a plurality of rolling elements (33) arranged between said inner ring (32) and said outer ring (31), wherein
at least either one of said inner ring (32) and said outer ring (31) is the bearing ring (31, 32) of a rolling bearing according to claim 1.

3. The rolling bearing (3) according to claim 2, wherein
a main shaft (51) connected to a blade (52) is penetratingly fixed to said inner ring (32) in a wind turbine generator (50), and said outer ring (31) is fixed to a housing (53), thereby rotatably supporting said main shaft (51) with respect to said housing (53).

4. A method for producing a bearing ring (131, 132) of a rolling bearing (103), comprising the steps of:
preparing a formed body (110) constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity;
forming an annular heated region (111A) heated to a temperature of at least an A₁ point on said formed body (110) by relatively rotating an induction heating member (121) arranged to face part of an annular region (111) for becoming a rolling contact surface (131A, 132A) of said bearing ring (131, 132) in said formed body (110) to induction-heat said formed body (110) along the circumferential direction of said annular region (111); and
simultaneously cooling the whole of said heated region (111A) to a temperature of not more than an Mₛ point.

5. A method for producing a bearing ring (131, 132) of a rolling bearing (103), comprising the steps of:
preparing a formed body (110) constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity;
forming an annular heated region (111A) heated to a temperature of at least an A₁ point on said formed body (110) by relatively rotating an induction heating member (121) arranged to face part of an annular region (111) for becoming a rolling contact surface (131A, 132A) of said bearing ring (131, 132) in said formed body (110) to induction-heat said formed body (110) along the circumferential direction of said annular region (111); and
simultaneously cooling the whole of said heated region (111A) to a temperature of not more than an Mₛ point.

6. A bearing ring (131, 132) of a rolling bearing (103) having an inner diameter of at least 1000 mm,
constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium and at least 0.15 mass % and not more than 0.75 mass % of molybdenum with the rest consisting of iron and an impurity, wherein
a quench-hardened layer is formed by induction quenching along a rolling contact surface (131A, 132A) over the entire circumference.

7. A bearing ring (131, 132) of a rolling bearing (103) having an inner diameter of at least 1000 mm,
constituted of steel containing at least 0.43 mass % and not more than 0.65 mass % of carbon, at least 0.15 mass % and not more than 0.35 mass % of silicon, at least 0.60 mass % and not more than 1.10 mass % of manganese, at least 0.30 mass % and not more than 1.20 mass % of chromium, at least 0.15 mass % and not more than 0.75 mass % of molybdenum and at least 0.35 mass % and not more than 0.75 mass % of nickel with the rest consisting of iron and an impurity, wherein
a quench-hardened layer is formed by induction quenching along a rolling contact surface (131A, 132A) over the entire circumference.

8. A method for producing a bearing ring (231, 232) of a rolling bearing, comprising the steps of:
preparing a formed body (210) constituted of steel;
forming an annular heated region (211A) heated to a temperature of at least an A₁ point on said formed body (110) by relatively rotating an induction heating coil (221) arranged to face part of an annular region (211) for becoming a rolling contact surface (231A, 232A) of said bearing ring (231, 232) in said formed body (210) to induction-heat said formed body (210) along the circumferential direction of said annular region (211); and
simultaneously cooling the whole of said heated region (211A) to a temperature of not more than an Mₛ point, wherein
said induction heating coil (211) having such a shape that a region (221A) facing said annular region (211) and contributing to heating of said annular region (211) is included in the same plane is employed in the step of forming said heated region (211A).

9. A bearing ring (311, 312) of a rolling bearing (301) having an inner diameter of at least 1000 mm, comprising:
a rolling contact surface quenched layer (311C, 312C) formed along a rolling contact surface (311A, 312A) which is a surface where a rolling element (313) must roll over the entire circumference to include said rolling contact surface (311A, 312A);
a fitting surface quenched layer (311D, 312D) formed along a fitting surface (311B, 312B) fitting with another member to include said fitting surface (311B, 312B); and
an unhardened region (311E, 312E) formed between said rolling contact surface quenched layer (311C, 312C) and said fitting surface quenched layer (311D, 312D), wherein
the thickness of said fitting surface quenched layer (311D, 312D) is smaller than the thickness of said rolling contact surface quenched layer (311C, 312C).

10. A method for producing a bearing ring (411, 412) of a rolling bearing (401), comprising the steps of:
preparing a formed body (411, 412) constituted of steel;
forming an annular heated region (411, 412C) heated to a temperature of at least an A₁ point on said formed body (411, 412) by relatively rotating an induction heating member (421) arranged to face part of an annular region (411A, 412A) for becoming a rolling contact surface (411A, 412A) of said bearing ring (411, 412) in said formed body (411, 412) to induction-heat said formed body (411, 412) along the circumferential direction of said annular region (411A, 412A);
forming a rolling contact surface quenched layer (411C, 412C) along said annular region (41A, 412A) over the entire circumference by simultaneously cooling the whole of said heated region (411C, 412C) to a temperature of not more than an Mₛ point; and
forming a fitting surface quenched layer (411D, 412D) by relatively moving another induction heating member (423) arranged to face part of a region for becoming a fitting surface (411B, 412B) of said bearing ring (411, 412) in said formed body (411, 412) to induction-heat said formed body (411, 412) along the circumferential direction of the region for becoming said fitting surface (411B, 412B) while cooling the region heated by said another induction heating member (423) with a cooling member (424) following said another induction heating member (423).
